# EUROPEAN PATENT SPECIFICATION

(11) **EP 3 607 443 B1**
(45) Date of publication and mention of the grant of the patent: **21.08.2024**
(21) Application number: 17719534.4
(22) Date of filing: 19.04.2017
(51) Int. Cl.: G06F 9/46, G06F 16/23

(54) **HARDWARE TRANSACTIONAL MEMORY (HTM) ASSISTED DATABASE TRANSACTIONS**
VON HARDWARE-TRANSAKTIONSSPEICHER (HTM) UNTERSTÜTZTE DATENBANKTRANSAKTIONEN
TRANSACTIONS DE BASE DE DONNÉES ASSISTÉES PAR MÉMOIRE TRANSACTIONNELLE DE MATÉRIEL (HTM)

(43) Date of publication of application: 12.02.2020
(73) Proprietor: Huawei Technologies Co., Ltd., Longgang District Shenzhen, Guangdong 518129 (CN)
(72) Inventor: AVNI, Hillel, 80992 Munich (DE); AVITZUR, Aharon, 80992 Munich (DE)
(74) Representative: Goddar, Heinz J.
(86) International application number: PCT/EP2017/059235
(87) International publication number: WO 2018/192644

(56) References cited:
- US-A1- 2007 028 056
- US-A1- 2008 319 997
- US-A1- 2009 183 159
- LEIS VIKTOR ET AL: "Exploiting hardware transactional memory in main-memory databases", 2014 IEEE 30TH INTERNATIONAL CONFERENCE ON DATA ENGINEERING, IEEE, 31 March 2014 (2014-03-31), pages 580 - 591, XP032595854, DOI: 10.1109/ICDE.2014.6816683
- ANONYMOUS: "Bloom filter - Wikipedia (as of 2017-04-11)", WIKIPEDIA, 11 April 2017 (2017-04-11), XP055381304, Retrieved from the Internet <URL:https://en.wikipedia.org/w/index.php?title=Bloom_filter&oldid=774976773#Cache_filtering> [retrieved on 20170613]
- "Oracle 8i Parallel Server", INTERNET CITATION, December 1999 (1999-12-01), XP002275984, Retrieved from the Internet <URL:http://www.lle.rochester.edu/pub/support/Oracle_817/paraserv.817/a76968.pdf> [retrieved on 20040402]
- ANONYMOUS: "Lamport timestamps - Wikipedia", 26 December 2016 (2016-12-26), XP055384218, Retrieved from the Internet <URL:https://en.wikipedia.org/w/index.php?title=Lamport_timestamps&oldid=756804180> [retrieved on 20170622]
- YOSSI LEV ET AL: "Split hardware transactions", PRINCIPLES AND PRACTICE OF PARALLEL PROGRAMMING, ACM, 2 PENN PLAZA, SUITE 701 NEW YORK NY 10121-0701 USA, 20 February 2008 (2008-02-20), pages 197 - 206, XP058222939, ISBN: 978-1-59593-795-7, DOI: 10.1145/1345206.1345236

## Description

### FIELD AND BACKGROUND OF THE INVENTION

The present invention, in some embodiments thereof, relates to utilizing a Hardware Transactional Memory (HTM) for an in-memory database and, more particularly, but not exclusively, to utilizing an HTM for an in-memory database for a plurality of threads accessing the in-memory database by splitting database transactions to multiple HTM transactions.

Computing power is constantly increasing and evolving, in particular, through multi-processing utilized through a plurality of threads running on one or more cores of one or more processors allowing concurrent execution of a plurality of processes.

Similarly, storage technologies and architectures are also constantly advancing, in particular, system memory utilized through high-density (capacity) and high-speed Dynamic Random Access memory (DRAM).

The ever evolving high-density high-speed memory methodologies allow for storing increased volumes of data in the volatile DRAM to support accelerated access and reduced latency thus allowing for increased performance. One example for such an implementation may be an in-memory database where a database and/or a part thereof may be stored in the system memory utilized by the DRAM. Accessing the database may be further accelerated by initiating a plurality of concurrent accesses (database transactions) to the in-memory database through a plurality of concurrent processes executed by the plurality of threads.

V. Leis et al., "Exploiting Hardware Transactional Memory in Main-Memory Databases", 2014 IEEE 30th International Conference on Data Engineering, p. 580-591 describes an architecture where transactional memory is used as a building block for assembling complex database transactions.

US 2007/0028056 A1 describes a transactional memory programming interface which allows a thread to directly and safely access one or more shared memory locations within a transaction while maintaining control structures to manage memory accesses to those same locations by one or more other concurrent threads. Each memory location accessed by the thread is associated with an enlistment record, and each thread maintains a transaction log of its memory accesses. Within a transaction, a read operation is performed directly on the memory location, and a write operation is attempted directly on the memory location, as opposed to some intermediate buffer. The thread can detect inconsistencies between the enlistment record of a memory location and the thread's transaction log to determine whether the memory accesses within the transaction are not reliable and the transaction should be re-tried.

### SUMMARY OF THE INVENTION

According to a first aspect of the present invention there is provided a method of utilizing a Hardware Transactional Memory (HTM) according to claim 1.

Splitting the database transactions to HTM transactions may significantly simplify the database transaction management while significantly increasing database access performance by taking advantage of efficient HTM hardware mechanisms assuring transaction atomicity for preventing access conflicts and reducing and/or avoid use of complex software implemented mechanisms. Moreover, the system applies an optimistic concurrency control for the read HTM transactions and a pessimistic concurrency control for the write HTM transactions. This may significantly increase the database access and processing performance since a conflict (contention) between two write HTM transactions may be detected very early in the transaction (at initiation stage). At such detection one of the concurrent write HTM transactions may be aborted to avoid redundant processing work for processing the write HTM transactions that will eventually abort. On the other hand, the performance of read HTM transactions, in particular read-after-write HTM transaction, may be significantly increased since the optimistic concurrency control may assure minimal abort events resulting of concurrent read and write HTM transactions. Furthermore, executing the validate-and-commit operation in a separate HTM transaction may allow maintaining compliance with the cache line size restrictions while taking advantage of the atomicity attribute of the HTM. Therefore even for excessive database transactions, in particular large read database transactions the compliance with the cache line size restrictions may be maintained.

In a further implementation form of the first aspect, a size of each of the plurality of HTM transactions is adapted to fit in a single cache line of the processor. This may allow overcoming the processor cache line capacity restriction and may significantly reduce the number of database transaction abort events since violating the cache size capacity restriction is a major contributor to the abort events of the database transactions. Moreover, this allows taking advantage of processor's inherent hardware cache coherency mechanism which may be highly efficient thus significantly increasing performance of the database transactions and the overall database access performance.

In a further implementation form of the first aspect, a copy of the content of the previous version of the certain row is created by the other write HTM transaction. This allows the read HTM transactions to fetch the row's content (data) even in case a concurrent write HTM transaction is currently in progress altering the row's content.

In a further implementation form of the first aspect, the copy of the content of the previous version of the row is created in the undo-set of the other write HTM transaction. This allows reducing redundant operations to create the copy of the row's content previous version by adding the row's data to the undo-set that is created anyway by the concurrent write HTM transaction that gained access to the row. The undo set which is created by the concurrent write HTM transaction is needed in case the concurrent write HTM transaction fails and a rollback is needed.

In the first aspect, for the read HTM transaction in case no other write HTM transaction is detected, the processor fetches the content of the certain row. The optimistic implementation for the read HTM transactions ensures that in case no concurrent write HTM transaction is detected, the read HTM transaction gains immediate access to the row.

In a further implementation form of the first aspect, during the read HTM transaction the processor fetches the content of the certain row updated by the other HTM transaction in case the other write HTM transaction finished before the validate and commit HTM transaction which is conducted for the read HTM transaction. This ensure that in case the concurrent write HTM transaction completes before the read HTM transaction is committed, the read HTM transaction may be re-initiated to fetch the most recently updated content of the row that was updated by the concurrent write HTM transaction.

In a further implementation form of the first aspect, during the read HTM transaction the processor fetches the content of the certain row updated by the other HTM transaction in case the other write HTM transaction and the read HTM transaction are part of the same each database transaction. This may ensure high performance while maintaining data integrity by identifying the read HTM transaction and the concurrent write HTM transaction are part of the same database transaction. This allows the HTM read transaction to take the most recently committed data of the row from within the context of the (same) database transaction.

In a further implementation form of the first aspect, each thread maintains a local last committed version, LCA, which is used exclusively by each thread, and the local LCA is synchronized with a global LCA only when the row ID and row version ID are different from the ID value and version value which are stored in the local LCA. Identifying conflicts and potential contention conditions between concurrent HTM transactions is done according to an identification signaling mechanism in which each thread is uniquely identified.

Implementation forms of the first aspect may allow efficiently identifying the conflict between the concurrent HTM transactions. Using the local ID and version values may further remove a potential bottleneck caused by concurrent and frequent accesses of the plurality of threads to a centralized identification logging location (resource). Thus only in case of suspected conflicts due to potentially out of date local copies, the respective thread may access the central logging location.

In a further implementation form of the first aspect, the write HTM transaction of the each database transaction is re-initiated until exceeding a retry threshold defining a predefined number of retries. In order to reduce abort events, a write HTM transaction may be re-initiated for a predefined number of times before aborting to check whether the concurrent write transactions has completed.

In a further implementation form of the first aspect, the each database transaction is aborted after exceeding the retry threshold. This may be essential to prevent deadlocks between concurrent database transactions.

In the first aspect, within the validate and commit additional HTM transaction which is conducted for the read HTM transaction, validating the HTM transaction is done immediately before committing the HTM transaction. This may significantly reduce the contention window in which the HTM transaction is exposed to a potential conflict with another HTM transaction.

In a further implementation form of the first aspect, the detection is utilized through a plurality of Bloom filters. The HTM implementation by Intel may employ high capacity Bloom filters that may allow conflicts detection while allowing large read database transaction without aborting the HTM transaction.

According to a second aspect of the present invention there is provided a system according to claim 12.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process of accessing an in-memory database using a Split Transaction Execution (STE) methodology, according to some embodiments of the present invention;
FIG. 2 is a schematic illustration of an exemplary system for accessing an in-memory database using a Split Transaction Execution (STE) methodology, according to some embodiments of the present invention;
FIG. 3 is a schematic illustration of an exemplary global and local Last Committed versions Arrays (LCA) maintained by a plurality of threads, according to some embodiments of the present invention;
FIG. 4 is a schematic illustration of an exemplary STE execution for concurrent HTM transactions, according to some embodiments of the present invention;
FIG. 5 is a capture of code excerpts demonstrating a minimized contention window, according to some embodiments of the present invention;
FIG. 6A, FIG. 6B, FIG. 6C and FIG. 6D are performance comparison graphs of experiment results of a TPC-C benchmark conducted to compare currently existing methods to a Split Transaction Execution (STE) methodology for accessing an in-memory database, according to some embodiments of the present invention; and
FIG. 7A, FIG. 7B, FIG. 7C and FIG. 7D are performance comparison graphs of experiment results of a Yahoo! Cloud Serving Benchmark (YCSB) conducted to compare currently existing methods to a Split Transaction Execution (STE) methodology for accessing an in-memory database, according to some embodiments of the present invention.

### DESCRIPTION OF SPECIFIC EMBODIMENTS OF THE INVENTION

The present invention, in some embodiments thereof, relates to utilizing an HTM for an in-memory database and, more particularly, but not exclusively, to utilizing an HTM for an in-memory database for a plurality of threads accessing the in-memory database by splitting database transactions to multiple HTM transactions.

According to some embodiments of the present invention, there are provided methods, systems and computer program products for utilizing an HTM which supports atomic HTM transactions for accessing an in-memory database through a plurality of database transactions initiated concurrently by a plurality of threads. The plurality of threads may run on one or more cores of one or more processors.

There are several challenges to overcome and problems to solve in order to implement a high performance in-memory database serving a plurality of threads concurrently accessing the database. The in-memory database comprising a plurality of rows resides in a system memory which is typically utilized by DRAM, in particular HTM shared by the plurality of threads. As result, segments of the database, e.g. rows of the database may typically be cached in one or more caches available to the threads, for example, a Level 1 (L1) cache, a Level 2 (L2) cache and/or a Level 3 (L3) cache. This imposes several restrictions, for example, the cache line is typically limited to a relatively small size, for example, 64 bytes. Therefore, a database transaction may typically not fit into a cache line. Another restriction is due to the need for maintaining cache since multiple threads may access the same row(s). This implies that data (temporarily) stored in the cache(s) needs to be presented in its most updated version to each of the plurality of threads which may access the database concurrently. Yet another requirement is to prevent contention in the database that may result from multiple threads accessing the same data in the database. This may require each database transaction to complete atomically, i.e. without another transaction altering the data content of the row(s) accessed by a certain database transaction. Furthermore, the restrictions may be inter-dependent and may affect each other.

The challenges of the in-memory database implementation may be addressed by a Split Transaction Execution (STE) described herein the current invention. The STE presents a novel approach for taking advantage of hardware mechanisms that may efficiently control accesses to the database to achieve high performance database access while resolving the problems described herein before. In particular, the STE takes advantage of the HTM ability to assure atomicity of each HTM transaction. Each of the plurality of HTM transactions is executed atomically with no other HTM transaction interfering (with respect to the same data) while the HTM transaction is in progress. The HTM may be utilized by, for example, the Intel HTM which is supported by the Intel IA instruction set Transactional Synchronization Extensions (TSX) to support the HTM transactions. The STE also takes advantage of the hardware cache coherency control mechanism(s) available by the hardware platform, i.e. the processor(s).

Employing the STE algorithm, each database transaction initiated by one of the threads is first split to a plurality of HTM transactions. Each of the HTM transactions may be adapted to access a single row (fitting into the cache line) of the in-memory database thus the HTM transaction fits into the cache line. The STE may provide an Application Programming Interface (API) to allow one or more software modules, for example, a utility, a script, a plug-in and/or the like which initiate database transactions to use the STE implementation.

The HTM transactions are controlled using an efficient realistic mechanism for detecting and preventing contention between concurrent database transactions initiated by the threads while serving database transactions with minimal latency. The realistic implementation relies on combining optimistic concurrency control for read HTM transactions with pessimistic concurrency control for write HTM transactions. Naturally, contention issues arise when two or more concurrent HTM transactions access the same row in the database, in particular a read HTM transaction following (at substantially the same time) a write HTM transaction (read-after-write) or two concurrent write HTM transactions.

The optimistic concurrency control implies that for a read HTM transaction, a transaction abort will be issued only rarely. First there is no contention issue for two read HTM transactions which may each proceed uninterrupted. During the read HTM transaction the accessed row is checked to determine whether another write HTM transaction currently accesses the same row (i.e. the row is live). In case there is no concurrent write HTM transaction, the read HTM transaction proceeds normally to commit the HTM transaction. In case a concurrent write HTM transaction is detected, the read HTM transaction fetches a previous version of the content of the row. Immediately before committing the read HTM transaction, the status of the row is rechecked. In case the row is still live, the read HTM transaction commits with the fetched previous version of the row. In case the row is no longer live, i.e. the concurrent write HTM transaction completed, the read HTM transaction re-initiates to fetch the content of the row as updated by the concurrent write HTM transaction.

The pessimistic concurrency control implies that for a write HTM transaction, checking for a concurrent write HTM transaction by checking whether the row is live is done immediately at initiation. In case there is no concurrent write HTM transaction, the write HTM transaction proceeds normally to commit the HTM transaction. In case a concurrent write HTM transaction is detected, the write HTM transaction immediately aborts to avoid processing the later write HTM transaction thus preventing redundant processing work that may be lost as the write HTM transaction will probably eventually abort. Optionally, the write HTM transaction is re-initiated a predetermined number of time (according to a predefined retry threshold), to check whether the concurrent write HTM transaction completed. After aborting, the write HTM transaction may apply a global lock to serialize the accesses to the row and gain exclusive access to the row.

The status of the accessed row as well as synchronization of the HTM transactions of the same database transaction is maintained through a novel identification signaling method. The identification system comprises a unique identifier (ID) value assigned to each of the threads and a version value associated with each of the threads. The version value is a self-incrementing value which is incremented by the respective thread upon each successful commit of a database transaction. A global structure, for example, a Global Last Committed version Array (LCA) may be created in which a slot is allocated for each of the threads. Each slot may store the respective thread's assigned ID value and the current version value. Each database transaction is identified by the ID value of the respective thread that initiated the database transaction and the current version value of the respective thread. Each of the rows in the database is also assigned with a row ID value which reflects the ID value of the respective thread that performed the most recent successful commit to the row and a row version indicating the version value of the respective thread at the time of the successful commit.

During each HTM transaction to a row of the database, the row ID and row version values are compared against the ID and version values of the database transaction comprising the respective HTM transaction. Based on the comparison, a probability for contention may be determined by identifying whether a concurrent write HTM transaction is currently in progress to the same row. There may be several possible scenarios.

Assuming a read HTM transaction is initiated to a certain row and identifies a concurrent write HTM transaction to the same certain row. In a first scenario the read HTM transaction and the write HTM transaction may be part of the same database transaction. Such read-after-write operation is allowed as the data of the certain row is contained within the context of the same database transaction and the read HTM transaction may therefore proceed normally. In a second scenario the concurrent write HTM transaction is part of another database transaction. In such case the read HTM transaction fetches a previous version of the row content (data) created by the concurrent write HTM transaction, possibly as part of the undo-set of the write HTM transaction. According to the embodiments of the present invention, during a validate-and-commit operation which is conducted for the read HTM transaction as a separate HTM transaction, immediately before the commit, the validate-and-commit HTM transaction checks whether the write HTM transaction finished. In case the write HTM transaction is not finished, the validate-and-commit HTM transaction commits with the fetched previous version of the row data. In case the concurrent write HTM transaction is finished, the read HTM transaction may be re-initiated to fetch the updated row content as written by the concurrent write HTM transaction.

Assuming a write HTM transaction is initiated to a certain row and identifies a concurrent write HTM transaction already accessing the same certain row. The write HTM access identifying the concurrent write HTM transaction immediately aborts to avoid redundant processing of the write HTM transaction that will eventually abort. Optionally, on detection of the concurrent write HTM transaction, the write HTM transaction re-initiates a predefined number of times (according to a predefined threshold) to check whether the concurrent write HTM transaction finished. Once the threshold is exceeded, the write HTM transaction aborts to prevent a deadlock and the database transaction may restart. In contrast to the read HTM transaction, the validate-and-commit operation is done within the write HTM transaction (in-place) immediately after acquiring access to the row in order to minimize the contention window. The actual memory access made by the write HTM transactions to the database row may be done immediately prior to the commit operation. This may significantly reduce the contention window since the period of time in which the write HTM transaction is actually manipulating the row and the probability that another HTM transaction will access the same row at that minimal contention window may be significantly reduced.

The threads accessing the database and updating their version values need to constantly update the global LCA to synchronize their version values with each other to maintain integrity of the contention detection mechanism. This may cause a bottleneck for accessing the global LCA since the plurality of threads may need to frequently access the global LCA and may therefore prevent scaling the STE to high number of threads concurrently accessing the database. In order to eliminate this bottleneck and allow for scaling, each thread may maintain a local LCA (cached LCA) which is used exclusively by each thread. The local LCA may be synchronized with the global LCA only when a potential contention is detected, i.e. the row ID and row version ID are different from the ID value and version value which are stored in the local LCA.

The STE may present significant advantages compared to existing methods for controlling database transactions.

Some of the existing methods may not utilize HTM transactions supported by modern memory technologies such as the HTM. As result, in order to prevent contention of concurrent database transactions, complex software mechanisms may be required to assure atomicity of the database transactions. Such implementation may inflict a high performance penalty due to the serialization of the database transactions. Moreover, the data segments accessed and/or required by the database transactions may violate the cache line size thus reducing the efficiency of the cache(s) and expose it to frequent abort events. In addition, the atomic execution of the database transactions may further increase the amount of database transaction abort events since the granularity of the database transactions is crude as each database transaction may access multiple rows of the database. This may require large segments of the memory to be cached thus increasing the possibility for contention between concurrent database transactions accessing the same segments of the database even if not accessing the exact same rows. By splitting the database transactions to HTM transactions, the STE may avoid the software implemented mechanisms for atomicity ensuring and take advantage of the efficient HTM hardware mechanisms assuring atomicity to maintain high performance access to the database. Moreover, splitting the database transactions to the HTM transaction each adapted to access a single row may assure that the HTM transactions comply with the cache line size restriction thus significantly increasing the effectiveness of the cache(s) and significantly increasing database access performance. In addition, by accessing the database through the HTM transactions, the granularity of the memory segments cached in the cache(s) is significantly increased since each HTM transaction accesses only the actual row it needs while avoiding caching of adjacent rows that may not be required. This may significantly reduce the database transaction abort events which in turn may significantly increase database access performance.

Some of the existing methods on the other hand may utilize HTM transactions, for example, the Time Stamp Ordering (TSO) algorithm as described in publication "Scaling HTM supported Database Transactions to many Cores" by Leis, V., Kemper, A., and Neumann, T. However, the TSO algorithm uses a global time stamping mechanism that is shared by all the threads and may therefore cause a bottleneck preventing scaling of the TSO algorithm to large numbers of threads. In contrast to that, the STE may prevent the bottleneck by using the local copies of the global LCA (cached LCA) where each thread exclusively uses its local LCA eliminating the bottleneck in accessing the global LCA.

Moreover, by applying the optimistic concurrency control for the read HTM transactions and the pessimistic concurrency control for the write HTM transactions, the STE may significantly increase the database access and processing performance. Since contention between two write HTM transactions may be detected very early in the transaction, i.e. at the initiation stage, and aborting the write HTM transaction in case of a concurrent write transaction, redundant processing work may be avoided to process write HTM transactions that may eventually abort. On the other hand, the performance of read HTM transactions, in particular read-after-write HTM transaction, may be significantly increased since the optimistic concurrency control may assure minimal abort events resulting of concurrent read and write HTM transactions.

Furthermore, executing the validate-and-commit operation in a separate HTM transaction may allow maintaining compliance with the cache line size restrictions while taking advantage of the atomicity attribute of the HTM. Therefore even for excessive database transactions, in particular large read database transactions the compliance with the cache line size restrictions is maintained. In addition reducing the contention window as done by the STE during the validate-and-commit HTM transaction may further contribute to reducing the HTM transaction abort events which translates to reduced number of database transaction abort events and may therefore significantly increase performance of the STE.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

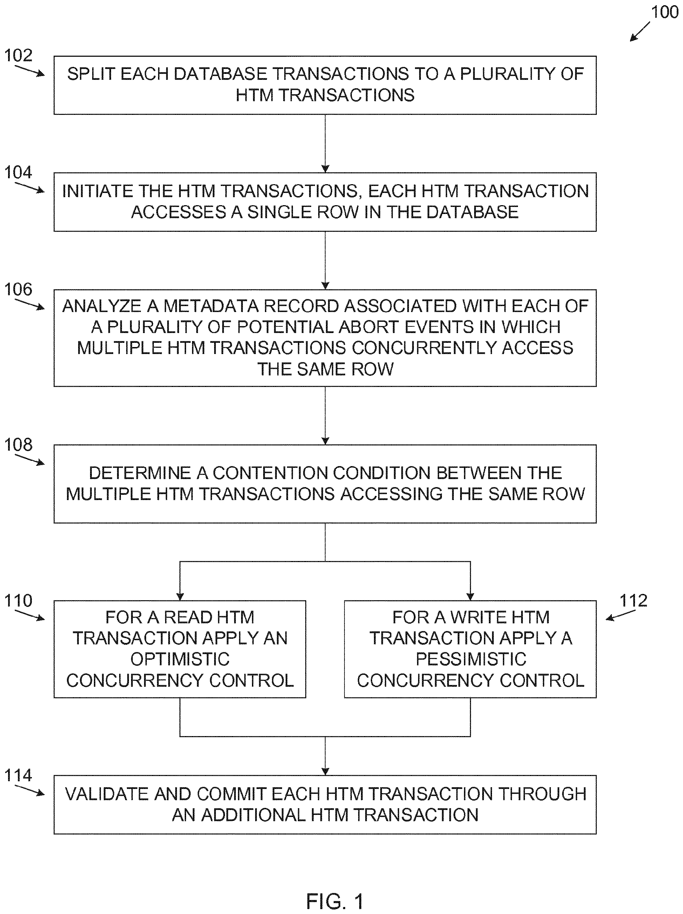

Referring now to the drawings, FIG. 1 illustrates a flowchart of an exemplary process of accessing an in-memory database using a Split Transaction Execution (STE) methodology, according to some embodiments of the present invention. An exemplary process 100 may be executed to utilize an HTM supporting atomic HTM transactions for implementing an in-memory database serving a plurality of threads running on one or more cores of one or more processors. An STE execution method is applied in which each database transaction is split to a plurality of HTM transactions each accessing a single row. The STE implements a realistic concurrency control in which optimistic concurrency control is applied to read HTM transactions while pessimistic concurrency control is applied to write HTM transactions. Contention between concurrent HTM transactions is detected, controlled and prevented through an identification signaling mechanism which significantly increases access and/or execution performance of the in-memory database. The identification signaling comprises identifying each database transaction as well as each row in the database with ID values and version values indicating the thread which initiated the database transaction that committed the most recent content (data) to the row and the version of that thread at the time of the commit operation.

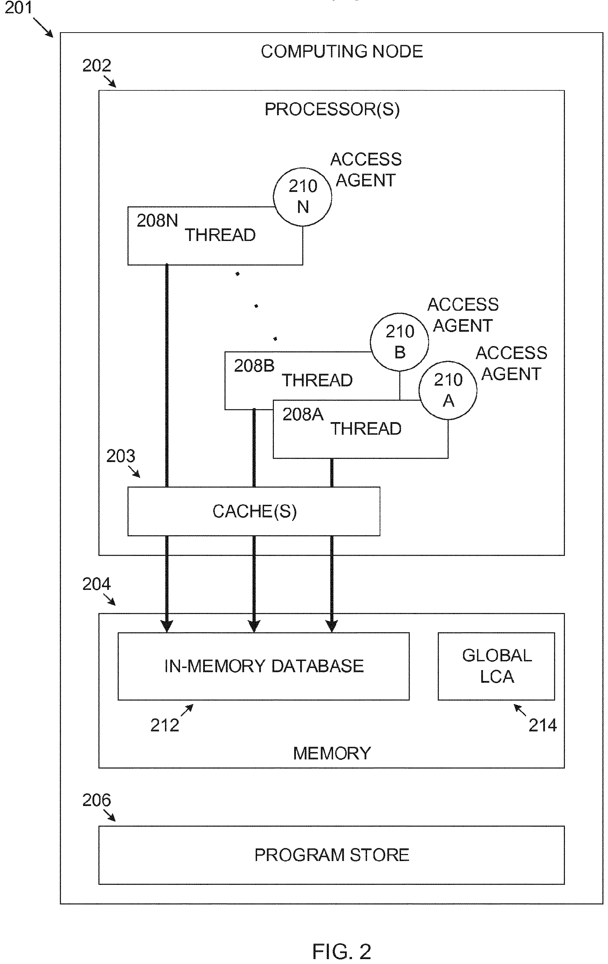

Reference is also made to FIG. 2, which is a schematic illustration of an exemplary system for accessing an in-memory database using a Split Transaction Execution (STE) methodology, according to some embodiments of the present invention. An exemplary system 200 executes the STE process the 100 for utilizing an HTM supporting atomic HTM transactions for implementing an in-memory database serving a plurality of threads running on one or more cores of one or more processor. The system 200 comprises a computing node 201 for example, a computer, a server, a cluster of computing nodes and/or any computing device. The computing node 201 includes a processor(s) 202, a memory 204 and a program store 206.

The processor(s) 202, homogenous or heterogeneous, may be arranged for parallel processing, as processor cluster(s) and/or as one or more multi core processor(s). The processor(s) 202 may support hyper-threading such that each core of the processor(s) 202 may execute a plurality of threads 208 each executing independently while sharing the resources of the processor(s) 202 and/or the resources of the computing node 201, for example, computing resources, memory resources, storage resources and/or the like. The processor(s) 202 may further include a cache(s) 203, for example, an L1 cache, an L2 cache, an L3 cache and/or the like which may be exclusively used by one or more of the threads 208 or shared among a plurality of the threads 208.

The memory 204 may include one or more volatile devices, for example, DRAM components and/or the like. The memory 204 may further include high-speed persistent memory such as for example, non-volatile dual in-line memory module (NVDIMM-N) components and/or the like. In particular the memory 204 includes HTM such as, for example, the Intel HTM and/or the like supporting atomic HTM transaction through, for example, the Intel IA instruction set TSX extension. The HTM stores an in-memory database 212 comprising a plurality of rows.

The storage 206 may include one or more computer readable medium devices, for one or more purposes, for example, storing program code, storing data, storing intermediate computation products and/or the like. The storage 206 may include one or more persistent memory devices, for example, a Flash array, a Solid State Disk (SSD) and/or the like for storing program code.

Each of the threads 208 may execute one or more software modules, for example, a process, an application, an agent, a utility, a script, a plug-in and/or the like. Wherein a software module may comprises a plurality of program instructions stored in a non-transitory medium such as the memory 204 and/or the program store 206 and executed by a thread such as the threads 208. Each thread 208 may execute, for example, an instance of an access agent 210 for applying the STE to access the in-memory database 212. The access agent 210 may provide an API to allow one or more software modules which initiate database transactions to interact with the access agent 210 in order to employ the STE implementation.

The access manager 210 may use one or more data structures, for example, a table, a list, an array and/or the like, in particular, a global Last Committed versions Array (LCA) 214 stored in the memory 204 for identifying contention conditions between concurrent HTM transactions. Each of the threads 208 is assigned a unique ID (*tid*) and a local monotonous self-incrementing version counter (*tv*)*.* A slot is allocated for each of the threads 208 in the global LCA (*lca*) 214 which stores the version value *tv* for each of the threads 208 in the respective slot identified by the *tid* value. While the global LCA 214 may be shared by all the threads 208, each of the threads 208 maintains a local copy (*cached_lca*) of the global LCA 214 which may be used exclusively by the respective thread 208. Upon each successful database commit, the respective thread 208 writes its current version value *tv* in the respective slot in the global LCA 214, i.e. *lca*[*tid*] ← *tv.* The thread 208 that committed successfully then updates the local LCA (*cached_lca*), i.e. increments *tv* locally. The use of the global LCA 214 and the local LCA copies is described herein after.

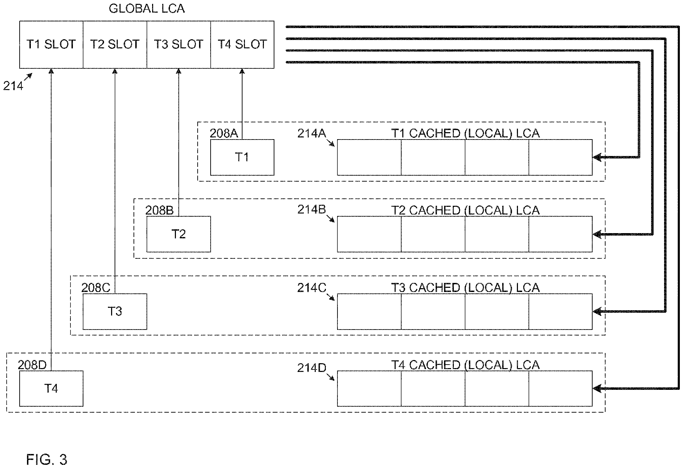

Reference is now made to FIG. 3 which is a schematic illustration of an exemplary global and local Last Committed versions Arrays (LCA) maintained by a plurality of threads, according to some embodiments of the present invention. An exemplary system such as the system 200 comprises four threads such as the threads 208, a thread T1 208A, a thread T2 208B, a thread T3 208C and a thread T4 208D. The threads 208A-208D are each assigned a slot in a global LCA such as the global LCA 214. Each slot is identified by the unique *tid* of the respective thread 208 and stores the current version *tv* of the thread. Each of the threads 208A-208D maintains a local copy of the global LCA 214 such that, the thread T1 208A maintains a local LCA 214A, the thread T2 208B maintains a local LCA 214B, the thread T3 208C maintains a local LCA 214C and the thread T4 208D maintains a local LCA 214D.

Reference is made once again to FIG. 1 and FIG. 2.

As shown at 102, the STE process 100 starts with the access agent 210 splitting each database transaction *T* to a plurality of HTM transactions such that each HTM transaction is adapted to access a single row in the database 212 hence fit in size into a single cache line of the cache(s) 203. By adapting the HTM transaction to fit the cache line size restriction, HTM transaction aborts due to the cache line capacity limitation may be extremely rare. The access agent 210 analyze the database transaction to identify which rows of the database 212 are accessed by the database transaction and split the database transaction to the plurality of HTM transactions accordingly.

Each database transaction *T* is identified by a unique set of ID value and version value of the respective thread 208 initiating the database transaction. Each row in the database 2121 also has the attributes row ID value (*rid*) and a row version value (*rv*)*,* which are the ID and version of the last database transaction *T* that wrote the content (data) of the row.

As shown at 104, the access agent 210 initiates the plurality of HTM transactions created from splitting the database transaction.

Whenever a write HTM transaction is accessing a certain row (initiated and gain access to the row), the certain row is marked as live and a copy of the previous content (data) of the row (*prev*) is created and stored, i.e. the *prev* stores the most recent successfully committed content of to the row before the write HTM transaction starts altering the row. The *prev* includes the most recent committed (previous) content of the row as well as the *rid* and the *rv* of the database transaction that performed the most recent successfully commit. This means that the *prev* link is set only while a live write database transaction *T* is writing (accessing) to the row. Optionally, the *prev* points to the undo-set of the live database transaction T whose write HTM transaction currently writing to the row.

As shown at 106, for each HTM transaction the access agent 210 analyzes a metadata record of a potential abort event to identify a potential contention condition in which the row currently accessed by the HTM transaction is concurrently accessed by another write HTM transaction. The metadata record, for example, a structure, a list a collection of variables and/or the like comprises the row ID value (*rid*)*,* the row version value (*rv*)*,* the ID value (*tid*) of the HTM transaction and the version value (*tv*) of the HTM transaction where the *tid* and the *tv* of the HTM transaction are the *tid* and the *tv* of the database transaction *T.*

As shown at 108, the access agent 210 identifies a potential contention scenario for the HTM transaction by comparing the *rid, rv, tid* and *tv* retrieved from the metadata record. The access agent 210 may employ an access function, *Access*(), presented in pseudocode excerpt 1 below for executing the access (read and write) HTM transaction. The access agent 210 may provide the *Access*() function as part of its API.

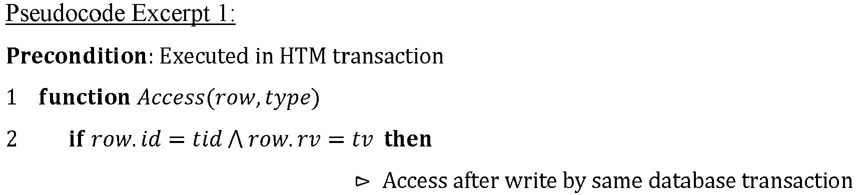

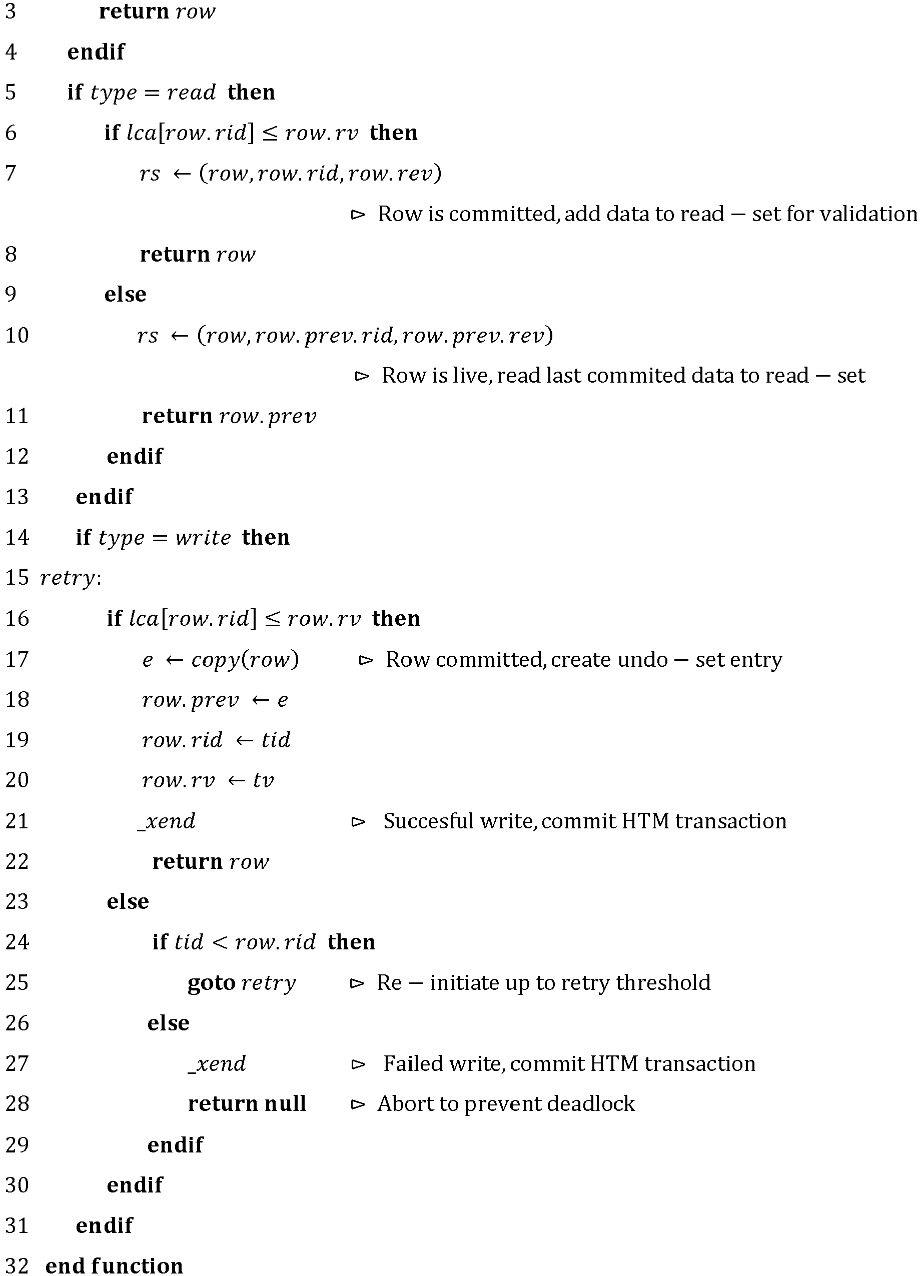

As expressed in a precondition in pseudocode excerpt 1, the *Access*() function is called from within the HTM transaction. The *Access*() function receives as parameters the accessed row (*row*) and the type of the HTM transaction (*type*)*.* First the *Access*() function checks, as seen in line 2 whether the accessed row was already written by the (same) executing database transaction *T* by comparing the *rid* and *rv* to the current local values *tv tid.* In case the HTM transaction is an access after another write HTM transaction of the same database transaction *T*, the row may be reused for the current HTM transaction and nothing is recorded in a read-set (for a read HTM transaction) or an undo-set (for a write HTM transaction). This implementation demonstrates the reduced overhead of the STE by avoiding redundant processing (work) to create the read-set or the undo-set when unnecessary. In case the HTM transaction is not following another write HTM transaction of the same database transaction *T,* the *Access*() function splits to two different paths, one path for a read HTM transaction (lines 5-13) and another path for a write HTM transaction (lines 14-30).

As shown at 110, for a read HTM transaction, the access agent 110 applies an optimistic concurrency control. As seen in line 6, the *Access*() function checks whether the accessed row is committed or whether the accessed row is currently being written by a concurrent write HTM transaction. In case the row is committed, as seen in line 7, the *Access*() function adds the current *rv* and *rid* of the row as well as a pointer to the row itself to the read-set (*rs*) and the current row is used by the read HTM transaction. However, In case the row is currently being written by the concurrent write HTM transaction of another database transaction, as seen in lines 9-11, the *Access*() function fetches a previous version of the contents of the row committed during the most recent successful commit (before the concurrent write HTM transaction accessed the row). As seen in line 10, the *Access*() function adds (fetches) the previous version of the contents of the row to the read-set (*rs*) using the *prev* link. The *Access*() function further adds (retrieves) the respective *rid* and *rv* associated with the previous version of the content of the row, i.e. the *tid* and *tv* of the database transaction that made the most recent successful commit to the row. This means that the data is read (fetched) from the copy of the previous version of the row content. As seen in pseudocode excerpt 1, in case of the read HTM transaction, the read HTM transaction commits outside the *Access()* function (there is no *_xend* commit function call) through an additional validate-and-commit HTM transaction, i.e. after the actual reading from the row is completed.

As shown at 112, for a write HTM transaction, the access agent 110 applies a pessimistic concurrency control. As seen in line 16, similarly to what is done in line 6 for the read HTM transaction, the *Access*() function checks the *rid* and *rv* of the accessed row to identify whether the row is live, i.e. whether a concurrent write HTM transaction is writing to the row. The *Access*() function makes this check immediately at the initiation of the HTM transaction to identify as early as possible the potential contention condition and abort immediately without investing computing resources, for example, processing resources, processing time, memory resources and/or the like to process the write HTM transaction that will eventually abort anyway. In case the row is not live, i.e. no concurrent write HTM transaction is accessing the row and the content of the row is committed, as seen in lines 17, the *Access*() function creates an undo-set for the write HTM transaction. As seen in lines 18-20, the Access() function creates the previous copy prev for the accessed row and links prev including the *rid* and *rv* to the undo-set of the write HTM transaction. As seen in line 21, in this case the *Access*() function commits immediately after acquiring exclusive access to the row thus performing commit in place by initiating the *_xend* commit function call. However, as seen in lines 23-29, in case the *Access*() function detects a concurrent write HTM transaction (live row) as seen in line 24, the *Access*() function immediately ends the write HTM transaction as seen in line 27 and aborts as seen in line 28 to break the symmetry and avoid a deadlock condition between concurrent write HTM transactions. Optionally, the *Access*() function re-initiates the write HTM transaction to allow the write HTM transaction to gain access to the accessed row in case the concurrent write HTM transaction completed by now. A retry threshold may be predefined to indicate the number of retry cycles, for example, 10. The *Access*() function may therefore re-initiate the write HTM transaction as seen in line 25 until the number of retry cycles exceeds the predefined threshold level.

As shown at 114, the access manager 110 initiates a validate-and-commit operation for the HTM transaction. During the validate-and-commit operation, the access manager 110 validates the read HTM transaction, i.e. verifies the read HTM transaction constructs a valid snapshot of the row data and commits written data to the committed state for the write HTM transaction. Both the validate operation and the commit operation are executed in the same HTM transaction. The access agent 210 may employ a *ValidateCommit*() function presented in pseudocode excerpt_2 below for executing the validate-and-commit operation through an additional HTM transaction. The access agent 210 may provide the *ValidateCommit*() function as part of its API.

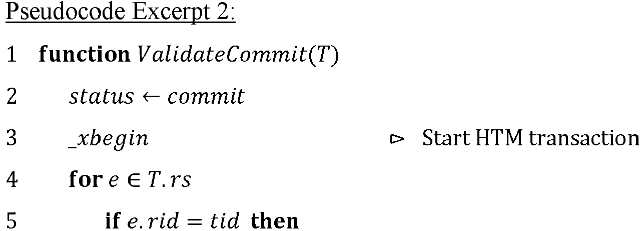

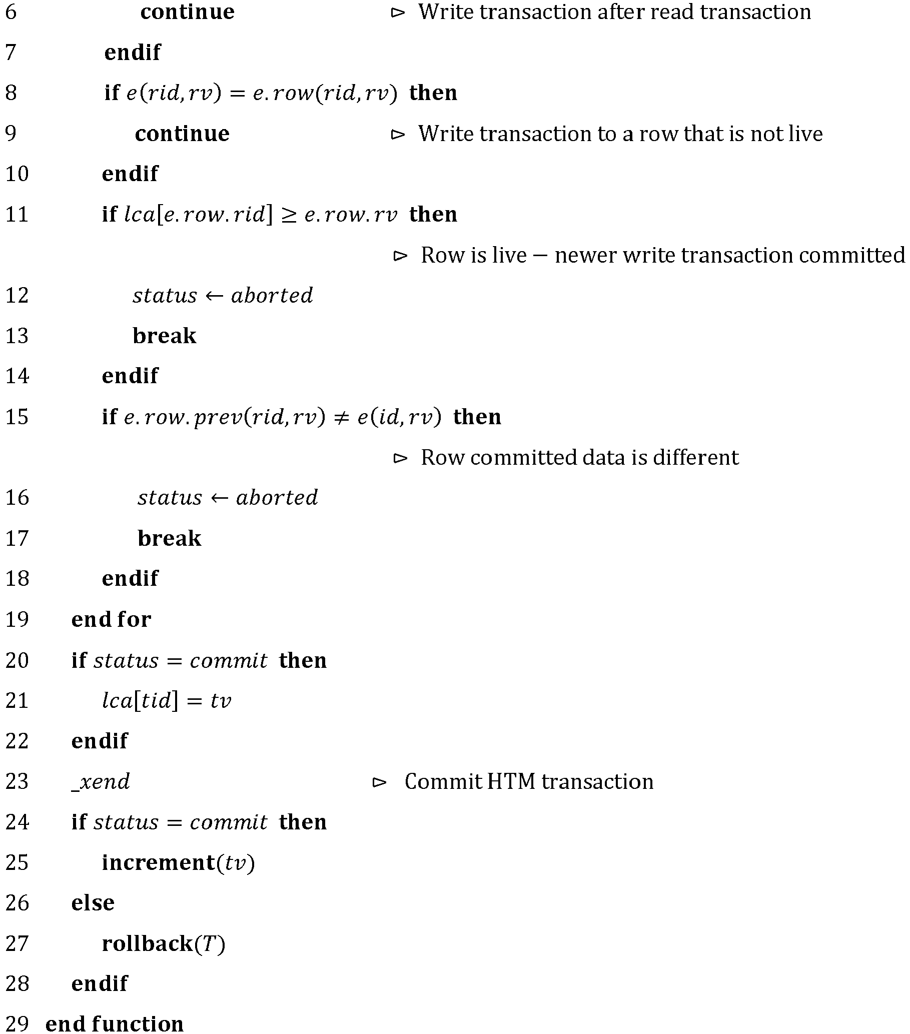

The *ValidateCommit*() function receives as parameters the database transaction *T* such that each HTM transaction that is part of the database transaction *T* (split from the database transaction *T*) is validated and committed. As seen in lines 3-26, the *ValidateCommit*() function initiates and executes an additional HTM transaction.

As seen in lines 4-22, the *ValidateCommit*() function verifies, for the read HTM transactions, that the content of the accessed row is valid and is the most recently successfully committed data and that newer data was not written to the accessed row by a later concurrent write HTM transaction (after the read HTM transaction fetched the accessed row's content). This verification may be done through a three steps validation.

First, as seen in line 5, the *ValidateCommit*() function checks whether the concurrent write HTM transaction has the same *tid* as the current database transaction *T.* As seen in line 6, in case the read HTM transaction and the concurrent write HTM transaction are of the same database transaction *T,* the read HTM transaction may proceed (continue). Such read-after-write within the same database transaction *T* is allowed since the read HTM transaction may fetch the most updated content of the accessed row data as committed by the (self) concurrent write HTM transaction from the context of the database transaction *T* which may be common to HTM transactions of the same database transaction *T.*

Then, as seen in line 8, the *ValidateCommit*() function checks whether the row *rid* and *rv* values logged by the read HTM transaction during the *Access*() function (retrieved from the read-set (*rs*) of the database transaction *T*) are the same as the current row *rid* and *rv* values. As seen in line 9, in case the row *rid* and *rv* values are the same, the read HTM may proceed (continue).

As seen in line 11, the *ValidateCommit*() function checks whether the concurrent write HTM transaction finished, i.e. whether the row *rv* value is larger than the row *rv* value logged by the read HTM transaction during the *Xccess*() function (retrieved from the read-set (*rs*) of the database transaction T). As seen in line 12, the read HTM transaction aborts since the row content fetched during the *Access*() function (fetched from the *prev* link) is not the most recently successfully committed data.

As seen in line 15, the *ValidateCommit*() function checks whether a later concurrent write HTM transaction accessed the row (after the HTM read transaction has fetched the row data). Such scenario may be expressed by the row *rv* value (in *e*) being different than the row *rv* value (in *e. row. prev*)*.* As seen in line 16, the read HTM transaction aborts since the row content fetched during the *Access*() function (fetched from the *prev* link) is not the most recently successfully committed data.

As seen in lines 23-24, for the write HTM transactions that successfully committed data in the accessed row, the *ValidateCommit*() function updates the global LCA 214 (*lca*) with the *tid* and *tv* of the database transaction *T.* As seen in line 25, after updating the global LCA 214 (*lca*), the *ValidateCommit*() function increments the local version value (*tv*) in the local LCA (*cached_lca*)*.* As seen in lines 26-27, in case the write HTM transaction does not successfully commit data in the accessed row, the database transaction is rolled-back and aborts.

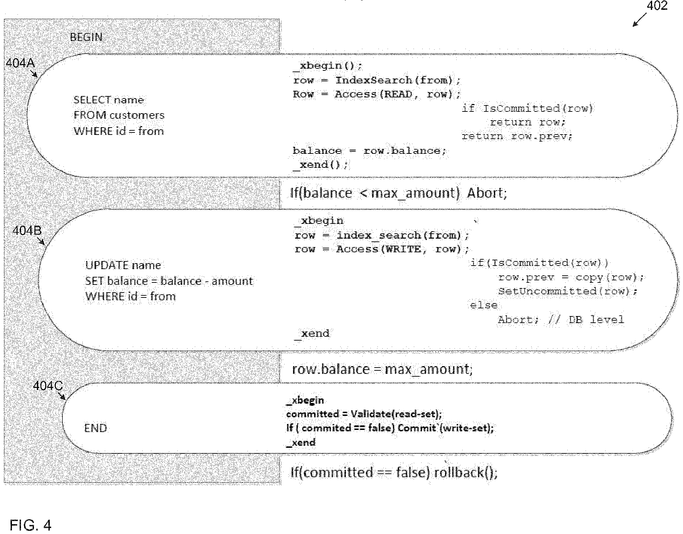

Reference is now made to FIG. 4 which is a schematic illustration of an exemplary STE execution for concurrent HTM transactions, according to some embodiments of the present invention. An exemplary STE execution flow 402 employing a process such as the process 100 presents a simplified high level view of exemplary SQL database transactions to an in-memory database such as the database 212 in which concurrent read HTM transaction and write HTM transaction may conflict. Each of the ellipsoids 404A, 404B and 404C holds an SQL statement which fits in a single split executed within the context of a single HTM transaction, where the ellipsoid 404A utilizes a read HTM transaction, the ellipsoid 404B utilizes a write HTM transaction and the ellipsoid 404C utilizes a validate-and-commit HTM transaction. The bold code is an exemplary C code implementation of the respective SQL statement which calls the relevant STE API, for example, the *Access*() function and the *ValidateCommit*() function of an access manager such as the access manager 110 and the plain code is an exemplary STE implementation as implemented by the access manager 110. As described herein before, both the *Acecss*() function for accessing the row in the database 212 and the *ValidateCommit*() function for validating and committing the data accessed during the *Acecss*() function, are executed as atomic HTM transactions.

As shown in read HTM transaction 404A and the write HTM transaction 404B, the HTM transaction is started before index search, (lndexSearch()), to facilitate an HTM based concurrent index. HTM based indexing however is out of the scope of the present invention and therefore related issues, such as, for example, insert and/or delete operations as well as specific data structures are not discussed. After the index search, within the same HTM transaction 404A, the *Access*() function of the manager 110 is called to perform the data access. Two exemplary auxiliary functions are introduced which may be implemented, for example, within the access manager 110 - *IsCommitted*() which is used for both read HTM transactions and write HTM transactions and *SetUncommitted*() which is used in the write HTM transaction. The execution flow 402 is simplified by assuming each HTM transaction accesses a row once, so the *SetUncommitted*() function and the *IsCommitted*() function may be unaware of the executing transaction. In addition, the *Access*() function may add the access to the read-set (in case of read HTM transaction) or the undo-set (in case of write HTM transaction) and does other calculation, which for brevity and clarity are not described herein. During the (optimistic) read HTM transaction 404A, the *IsCommitted*() function may be used to determine whether to use the current or previous version of the row (content). This may be done entirely within the HTM transaction context, so the _*xend*() instruction to commit the access (read or write) HTM transaction may be called only after the user transaction fetched the content (data) from the row, and not in the *4ccess()* function. However, as seen for the successful pessimistic read HTM transaction 404B, which acquires exclusive access in the *Access()* function, the data may be committed (written to the row) within context of the write HTM transaction (row = *Access*(*Write,* row)). Before committing the write HTM transaction, the copy of previous content of the row (most recently successfully committed version of the row) is linked *(row. prev* = copy(row)). A discussed herein before, the copy (*prev*) may reside within the undo-set of the writing database transaction. The exclusive access is granted to the write HTM transaction by the *SetUncommitted*() function, and accordingly, the write HTM function fails (aborts) if the *IsCommitted*() function returns false.

The STE execution as described in the process 100 is designed and implemented to resolve two main restrictions of the HTM transactions described herein above which are inherent to implementation for accessing the in-memory database 212. The first restriction is the cache line size limitation and associativity and this restriction is resolved by splitting the database transaction to a plurality of HTM transactions adapted to fit into a cache line (step 102). The second restriction relates to overreaction to conflicts, i.e. potential contention conditions, in which concurrent HTM transactions access the same row and therefore typically the same cache line where at least one of the HTM transactions writes to the row. Currently existing methods as known in art may typically abort the database transaction at detection of the conflict as the concurrent transactions may abort each other until one of the concurrent transactions is forced to take a global lock. Reducing the number of abort events relating to the database transactions aborts which are software triggered due to potential conflict(s) in the database level and may be named explicit aborts, is therefore a major challenge that is efficiently addressed by the STE employing the process 100. The STE applies two main mechanisms for reducing the amount of abort events - caching the global LCA 214 (*lca*) to maintain local LCA copies (*cached_lca*) for each of the threads 208 and minimizing the contention (conflict) window. These mechanisms may be applied during one or more of steps 106, 108, 110, 112 and 114 of the process 100 and are now described in further detail. In order to use the software triggering of the explicit aborts, the STE may use further hardware mechanism(s), for example, the Restricted Transactional Memory (RTM) mode of the Intel TSX block as opposed to the Hardware Lock Elision (HLE) mode which may be used by the existing methods for accessing the database 212.

Caching the global LCA 214 (*lca*) may be done to remove a potential bottleneck that may be caused by frequent and asynchronous accesses and updates the threads 208 need to make to the global LCA 214 (*lca*) in order to maintain the validity, consistency and/or integrity of the accessed rows' content (data). As shown in pseudocode excerpt 1, a thread 208 *t*₁ which initiates an HTM transaction to a certain row of the database 212 by executing the *Access()* function needs to access the global LCA 214 (*lca*) to read the slot associated with a thread 208 *t*₂ which concurrently writes to the same row. The slot of the thread 208 *t*₂ in the global LCA 214 (*lca*) may be updated frequently and asynchronously by the thread 208 *t*₂. These update operations may cause the HTM transaction initiated by the thread 208 *t*₁ to abort since the HTM transaction initiated by the thread 208 *t*₁ practically wraps the access execution (*Access*() function) of the concurrent write HTM transaction initiated by the thread 208 *t*₂.

In order to reduce the number of accesses made by the threads 208 to the global LCA 214 (*lca*)*,* each thread 208 maintains a local copy of the global LCA 214 (*lca*), i.e. the *cached_lca* as described herein before. The *cached_lca* may be partially outdated and therefore at critical times as described herein after, the thread 208 may need to access the global LCA 214 (*lca*) in order to synchronize its local *cached_lca* with the global LCA 214 (*lca*)*.* Therefore, the access manager 110 may typically use the *cached_lca* local copy and access the global LCA 214 (*lca*) only when a suspected conflict may be due to an unsafe *cached_lca* local copy, i.e. an outdated *cached_lca* local copy. This may significantly reduce the number of accesses made to the global LCA 214 (*lca*) thus removing the potential bottleneck.

As seen in lines 6 (for read HTM transactions) and 16 (for write HTM transactions), in case the accessed row is live which is identified by the values *rid* and *rv* of the accessed row being more recent than the *tied* and *tv* of the HTM transaction, the thread 208 executing the *Access*() function may use the *cached_lca* instead of the global LCA 214 (*lca*)*.* However, in case the *Access*() function determines the row is live, it may be due to an outdated *cached_lca*[id] in the *cached_lca*. In such case, when a suspected concurrent HTM transaction is in progress, the *Access()* function may trigger an abort for the HTM transaction with the *rid* value of the accessed row and the type of the concurrent HTM transaction in order to allow the thread 208 to update its *cached_lca*[id]*.* To trigger the HTM transaction abort the *Access*() function may use a utility function *htm_ste_abort* presented in code excerpt 1 below.

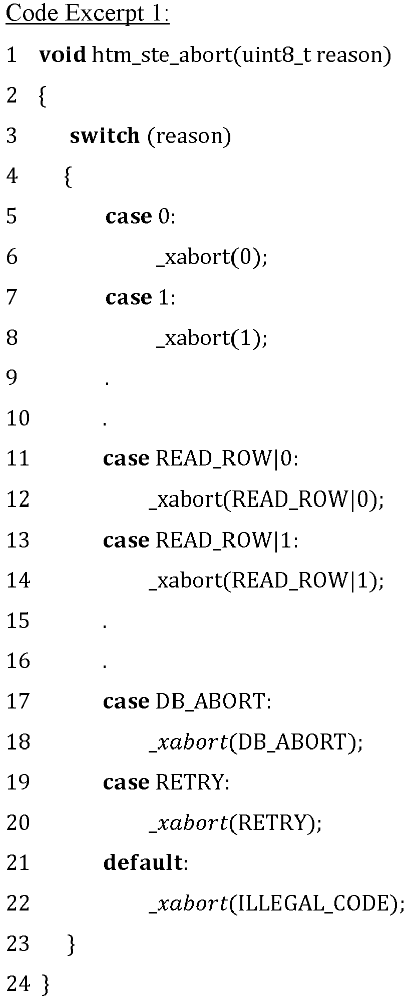

As seen in code excerpt 1, the actual abort trigger to abort the HTM transaction is the intrinsic *_xabort*(*code*) of the Intel IA instruction set TSX extension. However, since the intrinsic *_xabort*(*code*) requires an immediate parameter, a separate condition may be used for each case (scenario). This may be done efficiently by the branch table in the switch condition in line 3. This implies that the *tid* may be limited to 126 since the intrinsic *_xabort*() *code* argument is limited to provide the upper byte (8 bits) for the immediate value and one bit is reserved for identifying the access type. The reminder of the *code* argument is dedicated for the fallback lock. In order to support more than 126 threads, multiple *tids* may need to be overloaded on the same *code* argument which is inefficient and may limit scalability of the STE to more than 126 threads 208. In order to allow for improved scalability, more abort information may be transferred to the htm_ste_abort() abort handler of the explicit HTM transaction abort. This may be accomplished by one or more techniques, methods and/or implementations, for example:
- Implement non transactional writes by new ISA and/or assign a dedicated address range.
- Allow write operations to (processor) hardware registers that are not restored on HTM aborts. Such registers may exist, but currently, writing them in an HTM transaction triggers a mandatory abort. This approach may require a simple patch to the Basic Input / Output System (BIOS) of the processing node 201 as known in the art.
- The return value of *_xbegin*(), where the user abort code is multiplexed, has 16 reserved bits which may be used to transfer the abort information to the htm_ste_abort() abort handler.

As discussed before, the STE may be implemented for the Intel HTM using the Intel IA instruction set TSX extension supporting the HTM transactions. The STE may employ an exemplary *ste_begin* function presented in code excerpt 2 below to control the HTM transactions.

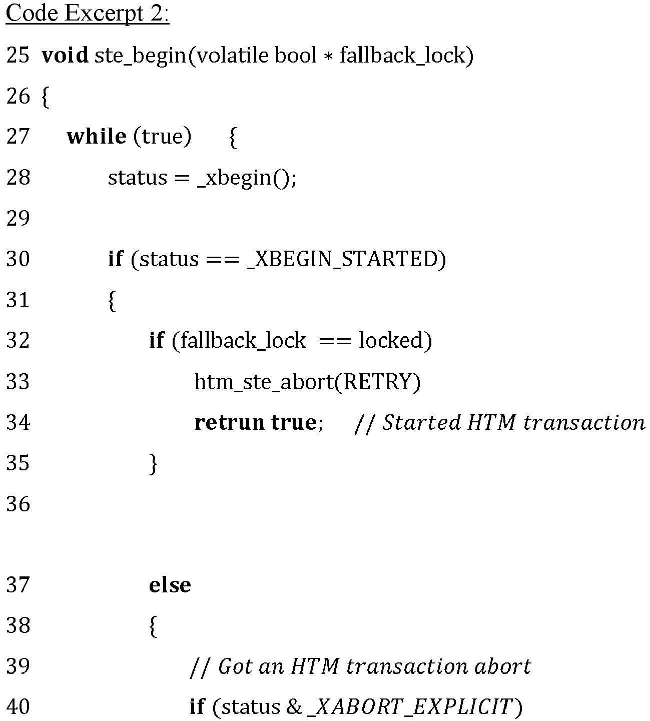

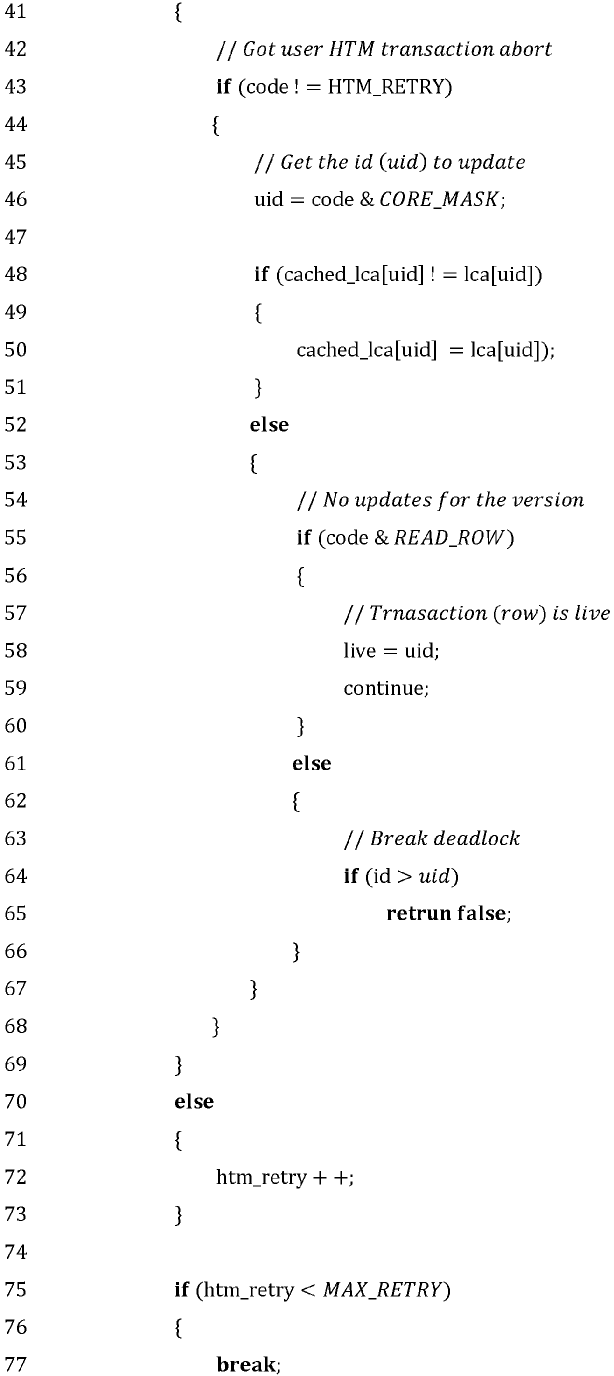

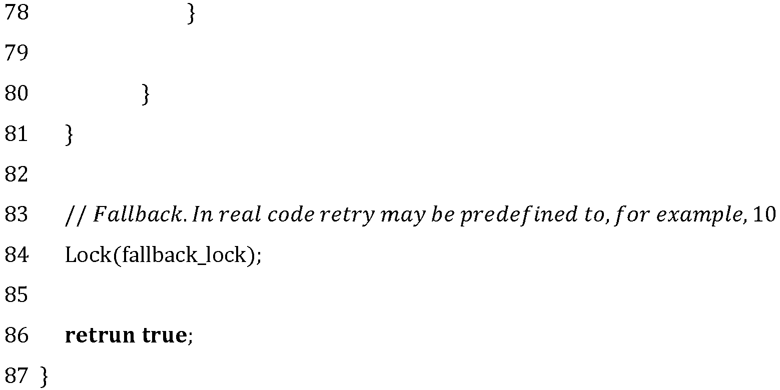

The *ste_begin* function returns true if the HTM transaction started successfully and false in case a database transaction abort is required due to conflicting HTM transactions causing a potential contention condition. As seen in line 28 an HTM transaction context is started (*_xbegin*)*.* As seen in line 32 the HTM transaction gained access to the row, i.e. fallback_lock = locked and may successfully start thus the *ste_begin* function returns true. In case of a conflict or capacity abort due to a concurrent HTM transaction, the *ste_begin* function branches to execute lines 37-80. As seen in line 33, the HTM transaction may be re-initiated a predefined number of retry cycles until exceeding a predefined retry threshold *htm_retry* (predefined for example as 10) which is a counter incremented at line 72 for every failed start of the HTM transaction. Once the retry threshold is reached, as seen in line 75, the *ste_begin* function breaks as seen in line 77. After breaking the HTM transaction may branch to a fallback mode, taking a global lock in line 84 and executes serially. Once the HTM transaction takes the *fallback_lock*, all other HTM transactions will abort as when checking the lock condition in line 32. This serialization may inflict a major performance penalty for accessing the database 212 and demonstrates the benefits of avoiding such conflicts as done by the STE. As seen in lines 43-68, in case the HTM transaction abort event is triggered by an application (user abort), i.e. the abort event is an explicit abort, the HTM transaction execution is not counted as a retry cycle.

In case the *ste_begin* function detects a potential unsafe *rid* and *rv* of the accessed row, the *ste_begin* function may trigger an explicit abort with the *rid* of the suspected concurrent HTM transaction and the type of access (read or write) as a parameter to the explicit abort handler. As seen in line 40, the HTM transaction abort handler may identify the abort event is a user triggered abort (user abort) and as seen in line 46, the *ste_begin* function may extract the *tid* of the potential concurrent write HTM transaction into *uid* and try to update the *uid* from the global LCA 214 (*lca*) to the *cached_lca*. In case the *cached_lca*[*uid*] was updated as seen in line 50, the *ste_begin* function may retry the HTM transaction with assuming the *rv* and *uid* combination may be safe during the retry cycle. However, if the *cached_lca*[*uid*] is not updated, it means the *rv* and *uid* identify the row in live and accessed by a concurrent write HTM transaction. In such case the *ste_begin* function may execute as follows:
- For a read HTM transaction: the accessed row is marked as live as seen in line 58 with the *uid* of the accessing database transaction *uid.* In case the *ste_begin* function identifies the same ID value in the *rid* of the accessed row and the *rv* of the accessed row remains the same it may indicate there was no database transaction abort. In such case the HTM transaction will fetch (read) the previous version of the row's content (the most recent successfully committed data) as seen in line 10 of the pseudocode excerpt 1.
- For a write HTM transaction: as seen in line 64, the *tid* and *uid*, which must be different are used by the *ste_begin* function to break the symmetry of the execution. The *ste_begin* function may determine to abort the database transaction to avoid deadlock by returning false as seen in line 65 of the code excerpt 2. In case the retry threshold is not exceeded, the *ste_begin* function may initiate a retry cycle to retry initiation of the HTM until the database transaction identified with the *uid* commits or aborts.

Therefore, caching the global LCA 214 (*lca*) and using local copies *cached_lca* may significantly reduce conflict aborts that are due to reading the actual last version *tv* of a concurrently accessing thread 208, while the concurrently accessing thread 208 is frequently updating the respective *tv*.

However, in various workloads there may be real contention conditions, i.e. multiple threads 208 writing repeatedly to the same row and as a result the database transactions initiated by the threads 208 may abort each other until one or more of the threads 208 are forced to take the serial fallback path. In order to reduce the conflicts and hence the potential contention conditions resulting from the repeated concurrent database transaction accesses to the same row(s), the STE employs one or more mechanisms to minimize the contention window in which the threads 208 may abort each other.

The STE implementation may follow, for example, guidelines dictated by Intel's optimization manual as described in publication "Intel 64 and IA-32 Architectures Optimization Reference Manual, 2016" by Intel. Following these guidelines, the STE may move the actual conflicting memory access towards the end of the critical section of the HTM transaction. In practice, the conflicting write access may be placed immediately before the HTM commit instruction. Therefore probability of a (cache) snoop event caused by another thread 208 concurrently accessing the same row, to abort the commit instruction of the HTM transaction is extremely low.

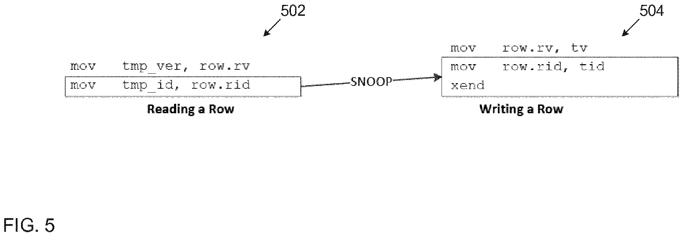

Reference is now made FIG. 5, which is a capture of code excerpts demonstrating a minimized contention window, according to some embodiments of the present invention. A code segment 502, presents a memory access executed during a read HTM transaction *T_{R}* and a code segment 504 presents a memory access executed during a concurrent write HTM transaction *T_{W}* writing to the same row using the *Access*() function as described in pseudocode except 1. The indicated code lines (in the rectangles) show the time window, referred to as the contention window, in which the write HTM transaction *T_{W}* is vulnerable, i.e. the time in which a snoop caused by the concurrent read HTM transaction *T_{R}* may inflict an abort to the write HTM transaction *T_{W}*. The contention window starts from the cycle when the first shared write completes until the *_xend* completes. As the *_xend* is internal to the thread 208 and may require very few machine cycles (of the processor(s) 202), and as the *rv* and *rid* are typically in the cache of the thread 208 initiating the write HTM transaction *T_{W}*, writing *rv* and *rid* may typically last one machine cycle. Therefore the contention window may be very short, lasting a few machine cycles.

The STE therefore significantly reduces the number of abort events of the HTM transactions and as consequence number of abort events of the database transactions thus significantly increasing access performance to the database 212. However, the STE may further reduce the number of HTM transactions abort events for a read or write HTM transaction by reducing and/or eliminating a probability of successive abort events for the same HTM transaction accessing the same row in the database 212.

The read HTM transaction *T_{R}* may use the *cached_lca* and therefore the only shared data (shared with the concurrent write HTM transaction *T_{W}*) the read HTM transaction *T_{R}* reads from memory is the accessed row identification information. Specifically the *rid* and *rv* values of the accessed row are the only variables that are written both by the write access of the write HTM transaction *T_{W}* and accessed for read by the read HTM transaction *T_{R}*. As result, the probability of a contention between the read HTM transaction *T_{R}* and the write HTM transaction *T_{W}* is eliminated since the write HTM transaction *T_{W}* writes the *rid* and *rv* out of the HTM transaction. In case the write HTM transaction *T_{W}* write the *rid* and *rv* values, before the read HTM transaction *T_{R}* reads them and before the read HTM transaction *T_{R}* is committed, the read HTM transaction *T_{R}* will abort. However, in case the write HTM transaction *T_{W}* is committed, than only after the database transaction which initiated the write HTM transaction *T_{W}* will commit or abort, another write HTM transaction will be able to write the row *rid* and *rv* again. Therefore the probability the read HTM transaction *T_{R}* will abort again, equals approximately the probability that the write HTM transaction *T_{W}* which caused the read HTM transaction *T_{R}* to abort in the first place will abort and retry, and will write again the same row concurrently with the read HTM transaction *T_{R}*.

The sequence of steps executed by the write HTM transaction *T_{W}* writing to a certain row is as described for the *Access*() function in pseudocode excerpt 1:
(1) Read the *rid* and *rv* of the accessed row.
(2) Check the *rid* in the *cached_lca* of the respective thread 208 that initiated the database transaction comprising the write HTM transaction *T_{W}*.
(3) Copy the content of the accessed row to a local undo-set entry.
(4) Update (write) the *rid* and *rv* of the accessed row.
(5) Commit the write HTM transaction *T_{W}*.

In case the write HTM transaction *T_{W}* caused the read HTM transaction *T_{R}* to abort, it takes place in step 4 where the write HTM transaction *T_{W}* writes the row information *rid* and *rv* which is limited to few machine cycles and takes place immediately prior to the commit operation. Therefore, the only possibility for the write HTM transaction *T_{W}* to abort after it caused the read HTM transaction *T_{R}* to abort is in case another HTM transaction reads or writes the *rid* and *rv* of the accessed row before the write HTM transaction *T_{W}* executes step 5. As seen for the *Access*() function in pseudocode excerpt 1, step 4 is utilized through writing one cache line and the immediately following instruction is step 5, therefore the probability for such a scenario to take place is extremely low.

The STE may apply the same implementation for the validate-and-commit HTM transaction. As seen from pseudocode excerpt 2, a validate-and-commit HTM transaction *T_{C}* employing the *ValidateCommit*() function writes to the global LCA 214 (*lca*) in line 21. The following instruction in line 23 is committing the HTM transaction so a conflict may occur only in case a snoop induced by an HTM transaction initiated by another thread 208 while checking the version (*rid*) of the accessed row to determine whether the accessed row's content (data) is committed. As the commit instruction requires only a few machine cycles, the probability for such a scenario to take place is very low. However, a cache snoop induced by read from the global LCA 214 (*lca*) may cause the validate-and-commit HTM transaction *T_{C}* to abort. The read from the global LCA 214 (*lca*) may originate from a user aborted read HTM transaction which gets the previous value and/or from a concurrent validate-and-commit HTM transaction *T_{V}* which accesses the global LCA 214 (*lca*) in order to determine whether the uncommitted row is still uncommitted.

In case the snoop originated from the user aborted HTM transaction, the read HTM transaction fetches the previous content of the row (most recently successfully committed data) and may therefore not retry. Therefore the read HTM transaction may not cause another abort to the validate-and-commit HTM transaction *T_{C}*.

In case the snoop originated from the concurrent validate-and-commit HTM transaction *T_{V}*, there are two possible scenarios. In the first scenario, the concurrent validate-and-commit HTM transaction *T_{V}* completes successfully and therefore does not abort the validate-and-commit HTM transaction *T_{C}* again. In the second possible scenario, the validate-and-commit HTM transaction *T_{C}* retries and updates (writes) its slot in the global LCA 214 (*lca*) before the concurrent validate-and-commit HTM transaction *T_{V}* commits thus causing the concurrent validate-and-commit HTM transaction *T_{V}* to abort. In this case the probability that the concurrent validate-and-commit HTM transaction *T_{V}* retries again within the contention window is extremely low since the concurrent validate-and-commit HTM transaction *T_{V}* commits immediately after writing to the global LCA 214 (*lca*) which requires only few machine cycles.

The validate-and-commit HTM transaction may be larger, but it is mostly read-only accesses until the final write access to the global LCA 214 (*lca*) to update the respective slot of the respective thread 208 which is immediately followed by the commit operation. As the STE may employ the Intel HTM and the Intel IA instruction set TSX extension, the large read-only accesses may not present an issue. This is due to the fact that the Intel HTM may employ large bloom filters to detect conflicts while allowing read-set entries evict from the cache(s) 203 without aborting the HTM transaction. This allows the HTM to accommodate very large read-sets, and the potentially large read-only prefix is therefore tolerable.

Correctness of the STE implementation, i.e. maintaining serialization and avoiding deadlocks may be proved and verified analytically.

First safety of the STE is verified, i.e. serialization of the HTM transactions to follow the order dictated by the execution flow. A database transaction *Tᵢ* is a set of reads *rᵢ*(*x*) and writes *wᵢ*(*x*) followed by a commit operation *cᵢ* where *x* are rows of a database containing a plurality of rows *X* such that *x G X.* As known in the art, two operations are said to conflict if they both operate on the same data item and at least one of them is a write access. It is said that an operation *oᵢ*(*x*) precedes in a conflict an operation *oⱼ*(*x*) if *oⱼ*(*x*) is a read access and *oᵢ*(*x*) is a write access, and the read operation *oⱼ*(*x*) reads (fetches) the data the write operation *oᵢ*(*x*) wrote, or if both *oᵢ*(*x*) and *oⱼ*(*x*) are write operations and the final value of the row x is written by the write operations *oⱼ*(*x*).

The serialization graph of an execution, is a directed graph whose nodes are the committed transactions and whose edges are all database transactions *Tᵢ* → *Tⱼ* (*i* ≠ *j*) such that one of *Tᵢ*'s operations precedes and conflicts with one of *Tⱼ* 's operations. The serializability theorem maintains that an execution is serializable if and only if it creates an acyclic serialization graph.

| | |
|---|---|
| **Lemma 1:** | If *Tᵢ* and *Tⱼ* are two database transactions split using STE and (*i* ≠ *j*), then *cᵢ* and *cⱼ* are serializable. |
| | Proof: As both *cᵢ* and *cⱼ* are executed in HTM transactions, i.e. lines 3 to line 23 in pseudocode excerpt 2 and as HTM implementations have single global lock semantics, either *cᵢ* → *cⱼ* or *cⱼ* → *cᵢ.* Therefore in STE executions, database transactions have inherent order, and it is said that *Tᵢ* precedes *Tⱼ* if *cᵢ* precedes *cⱼ*. |
| **Lemma 2:** | If two operations *oᵢ*(*x*) and *oⱼ*(*x*) conflict, *oⱼ*(*x*) precedes *oⱼ*(*x*) if and only if *Tᵢ* precedes *Tⱼ*. |
| | Proof: it is assumed by contradiction that *oⱼ*(*x*) precedes *oᵢ*(*x*) in a conflict while *Tᵢ* precedes *Tⱼ*. If the operation *oᵢ*(*x*) read from (in case *oᵢ*(*x*) is a read operation) or wrote to (in case *oᵢ*(*x*) is a write operation) the same row *x* that the write operation *oⱼ(x*) wrote to, than as seen in line 6 or line 16 in the pseudocode excerpt 1, *Tᵢ* identified the *tv* of *Tⱼ* in the global LCA 214 |
| | (*lca*), which means *Tⱼ* committed while *Tᵢ* was still alive (accessing the row) as seen in line 21 of the pseudocode excerpt 2. |

From lemmas 1 and 2 it may be concluded that in case there is an edge from *Tᵢ* to *Tⱼ* in the serialization graph, than *i* < *j* and therefore the graph is acyclic. As such, according to the serializability theorem database transactions *T* that follow the STE algorithm are serializable.

Now progress of the STE is verified, i.e. avoiding deadlocks to assure progress of execution. Each transaction *Tᵢ* in STE has a unique *tid*, and as seen in line 24 of pseudocode excerpt 1, the *tid* is used to break symmetry and avoid deadlocks. Thus in case *wᵢ*(*x*) and *wⱼ*(*x*) conflict, and the *tid* of *Tᵢ* is greater than the *tid* of *Tⱼ*, then *wⱼ*(*x*) may wait for *Tⱼ* to commit or abort, while in case *wᵢ*(*x*) identified the *tid* of *Tⱼ* it aborts to avoid deadlock. As the *tid* is a unique number, exactly one database transaction may survive the conflict and the deadlock may be avoided. Another aspect of the progress is that in case *Tᵢ* writes to a row that *Tⱼ* reads, and *Tⱼ* writes to a row that *Tᵢ* reads, both *Tᵢ* and if *Tⱼ* may abort and go into a live lock. However, this is not possible, as *Tᵢ* may cause *Tⱼ* to abort only if *Tᵢ* committed, as seen in line 12 of pseudocode excerpt 2 and therefore progress is maintained.

While the STE may be implemented without taking advantage of the HTM and splitting the database transactions to HTM transactions, doing so presents obvious superiority, advantages and benefits. This may be demonstrated by analyzing the STE implementing the *Access*() function and *ValidateCommit*() function presented in pseudocode excerpts 1 and 2 respectively to a closest, most efficient potential implementation that may be achieved without using the HTM transactions. One advantage of the HTM is its capability to accommodate efficient concurrent index operations. However the comparison analysis is focused on the implementation of the STE rather than on HTM features that may benefit any implementation. In particular, the access and validate-and-commit operations are analyzed for comparing the STE with vs. without the HTM transactions.

The access (*Access*()) functionality of the STE with and without HTM is first analyzed and discussed. When avoiding HTM transactions, a writing database transaction may need to latch the accessed row before accessing the row, then set the *rid*, *rv* and *prev* fields and finally release the latch of the row. Since STE targets pessimistic write concurrency control, the undo-set may be created using the row versions *rid* and *rv* sampled (read) before and after creating a copy of the accessed row's data, i.e. outside the latching period. However in order to set the actual row version values requires latching the row. The use of latching may block not only other writing database transactions but also reading database transactions. However, in addition to waiting for the latch, assuming the reading database transactions do not latch an accessed row for reading, which introduces significant overhead, and instead sample the version values of the accessed row, use the data, and afterward verify the version values are not changed the reading database transactions may encounter the following hazards:
(1) In case there was no concurrent writing database transaction (the accessed row is not live), the reading database transactions may use the actual data. However, in case the concurrent writing database transaction started writing to the accessed row while the reading database transaction is using the row's data, the reading database transaction may use inconsistent data and may therefore experience errors, for example, infinite loops, division by zero, etc.
(2) After the reading database transaction reads the actual data complete, the reading database transaction samples (reads) again the version value *rv* of the accessed row, to determine that the *rv* has not changed. However, in STE, as the writing database transactions employ pessimistic concurrency control, it is possible that a writing database transaction writes to the accessed row concurrently, but aborts and restores the version values *rid* and *rv* of the accessed row. In this case the reading database transaction may fail to detect the inconsistent (unsafe) version values. To prevent this, the writing database transactions may need to add some abort counting mechanism to the row's version values which may further reduce performance of the database accessing.
(3) The *Access*() function may also use the HTM as a sandbox. A reading database transaction that uses the *prev* field may read an entry from the concurrent writing database transaction undo-set. In case concurrent writing database transactions completes its execution, the writing database transactions might recycle the buffer holding the undo-set which may cause the reading database transactions to view and/or use inconsistent data. In another scenario, the writing database transactions might free the buffer holding the undo-set and may cause the reading database transactions to experience a segmentation fault. To resolve this some garbage collection mechanism may need to be implemented for the undo-set, which may entail additional overhead.

Therefore, the no HTM transaction implementation of access (*Access*()) functionality may not only be more complicated and involve additional overhead, but also allows for less parallelism of the plurality of database transactions accessing the database 212. When a writing database transaction locks an accessed row for writing, no reading database transactions accessing the same row may make progress. In the STE using the HTM transactions on the other hand, a reading database transaction may always make progress. In case a read HTM transaction gets a conflict abort, it implies a concurrent write HTM transaction wrote new content (data) to the accessed row and the committed data is already available to the read HTM transaction in the copy of the previous version of the row's content, *row. prev. data.*

The validate-and-commit (*ValidateCommit*()) functionality of the STE with and without HTM is now analyzed and discussed. Since the STE does not lock accessed rows against read HTM transactions, a database transaction *T*₁ may read the committed version of the accessed row while a concurrent database transaction *T*₂ is writing to the same row. In case of a symmetric implementation without the HTM the database transaction *T*₁ may see previous committed version (*rid* and *rv*) of the accessed row written by the concurrent database transaction *T*₂, and vice versa, the database transaction *T*₂ may see previous committed versions of another (different) accessed row written by the database transaction *T*₁. In such case only one of the database transactions *T*₁ and *T*₂ may survive while the other may be forced to abort. Otherwise, the database transaction *T*₁ may serialize before the database transaction *T*₂ and the database transaction *T*₂ may serialize before the database transaction *T*₁, which is an invalid situation. In HTM based STE, on the other hand, the commit HTM transaction verifies that newer (more recent) write HTM transactions which read the accessed row version values are live and commit, so only one of database transactions *T*₁ and *T*₂ may commit.

With lock based STE, i.e. no HTM STE, at commit, the database transaction *T*₁ must lock its own version and then verify all other writing database transactions (including the database transaction *T*₂) are live and not locked, and commit. If the database transaction *T*₁ sees the database transaction *T*₂ is locked, the database transaction *T*₁ must abort, as it cannot verify that the database transaction *T*₂ saw that the database transaction *T*₁ is locked. However, if the database transaction *T*₂ did see the database transaction *T*₁ is locked, the database transaction *T*₂ must abort as well, which can lead to a live-lock. This situation cannot happen with HTM based STE, were either the database transaction *T*₁ or the database transaction *T*₂ may commit, so under high contention, the HTM based STE may present significantly improved concurrency.

The performance, benefits and/or advantages of the methods, processes and systems for enhancing transactions to the in-memory database 212 using the STE methodology as presented in some of the embodiments of the present invention are demonstrated through several experiments. The experiments were conducted to simulate real world scenarios using popular benchmarks and workloads. The experiments were conducted using a hardware platform comprising an Intel Core i7-4770 3.4 GHz Haswell processor with 4 cores each with two hyper processes for a total of up to eight threads. Each of the cores has private L1 and L2 caches, whose sizes are 32 KB and 256 KB respectively. There is also an 8 MB L3 cache shared by all the cores.

During the experiments, performance and operational characteristics of the STE algorithm (HTM_STE) as described in the process 100 were compared to multiple existing database transactions execution algorithm. In particular, the STE algorithm was compared to the following algorithms:
▪ HTM_TSO: Time Stamp Ordering (TSO) algorithm in which each thread maintains a Local Version Counter. However, the safe array is global and readers set their version in the node in TSO style as described in publication "Scaling HTM supported Database Transactions to many Cores" by Leis, V., Kemper, A., and Neumann, T.
▪ HTM: Plain Intel HTM algorithm as described in the Intel architecture instruction set extensions programming reference.
▪ 2PL: Two phase locking with deadlock detection algorithm which employs a pessimistic concurrency control as described in publication "Speedy Transactions in Multicore in-memory Databases" by Tu, S., Zheng, W., Kohler, E., Liskov, B., and Madden, S.
▪ SILO: The optimistic concurrency control algorithm operated at best performance mode as described in the publication "Speedy Transactions in Multicore in-memory Databases" by Tu, S., Zheng et al.

The experiments were conducted for several benchmarks and workloads as well as workload variants using a DBx1000 database model such as the database 212 as known in the art which is a scalable single node On-Line Transaction Processing (OLTP) Database Management System (DBMS).

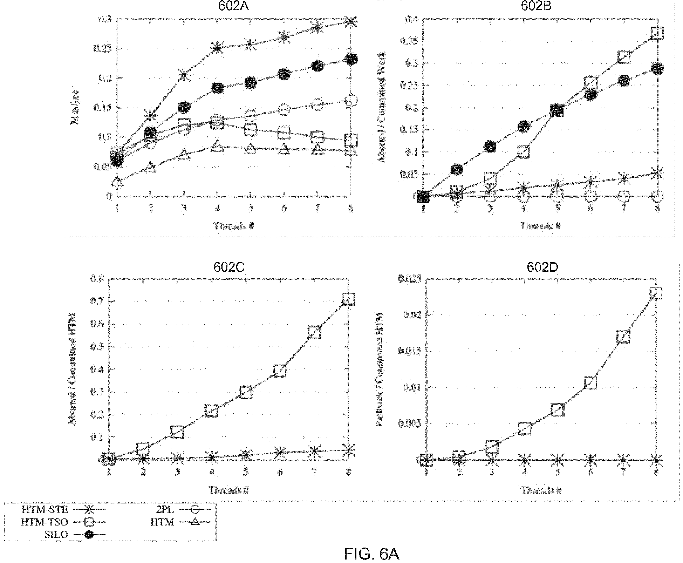

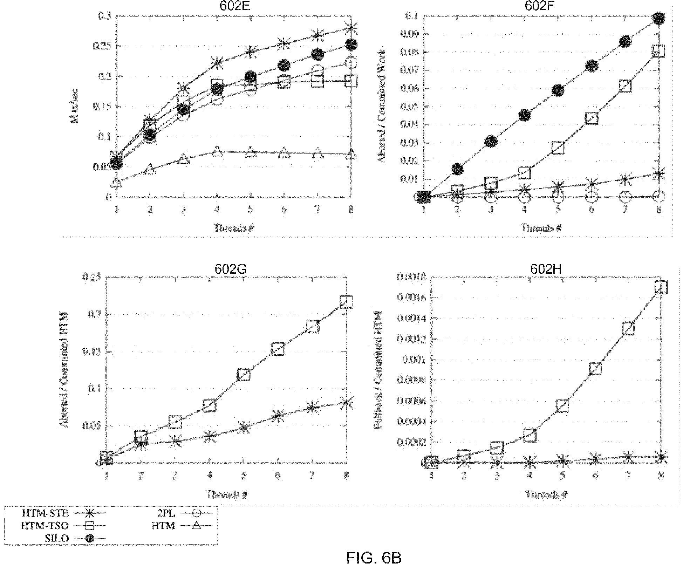

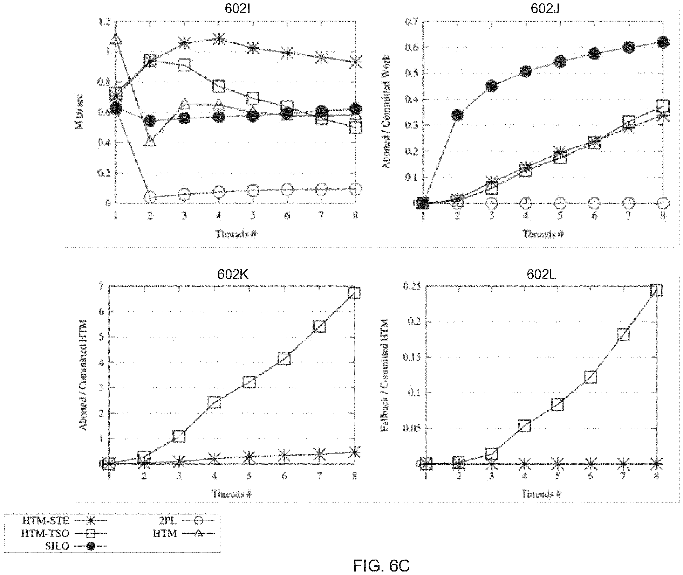

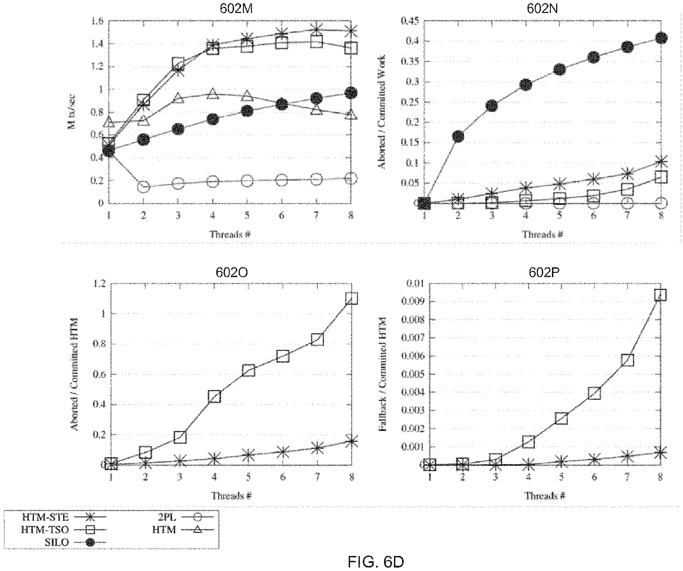

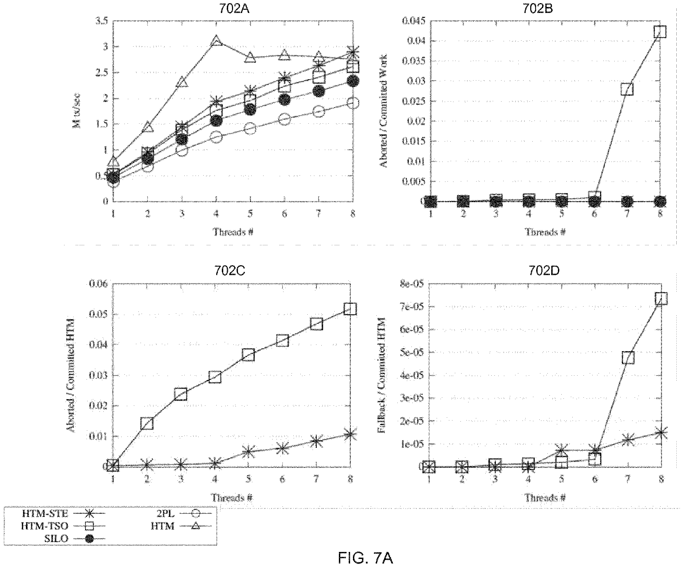

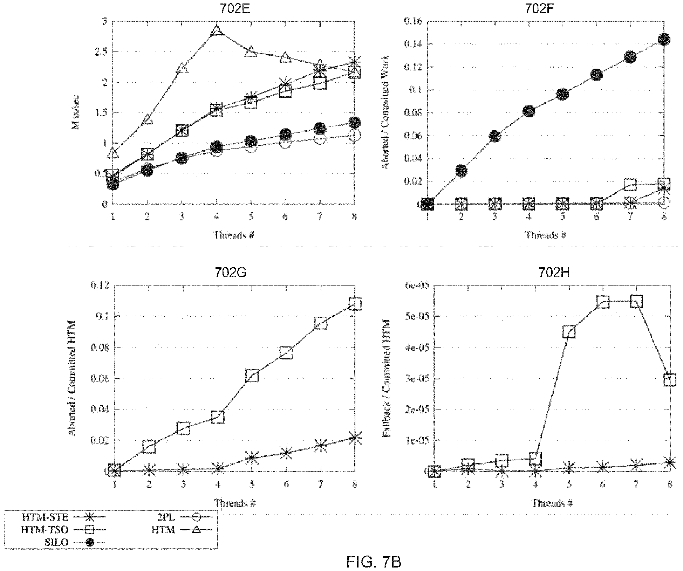

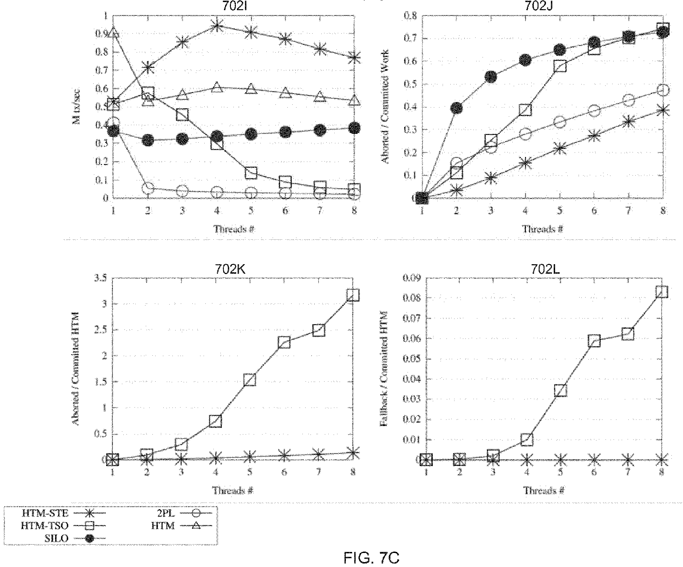

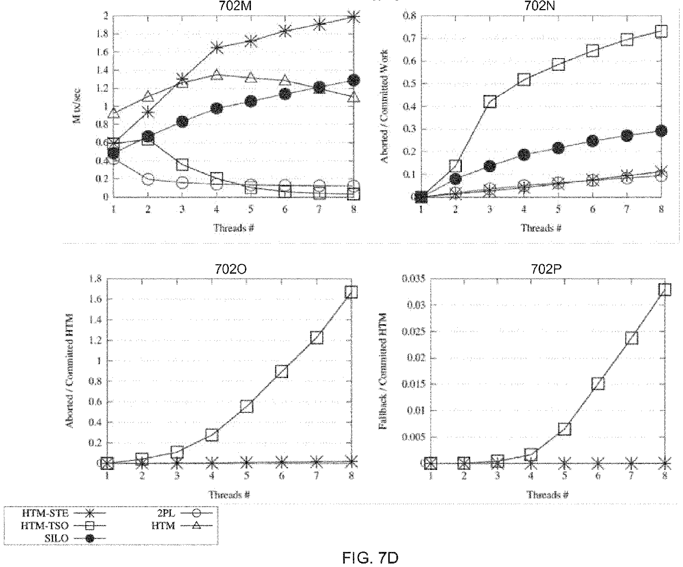

Reference is now made to FIG. 6A, FIG. 6B, FIG. 6C, FIG. 6D, FIG. 7A, FIG. 7B, FIG. 7C and FIG. 7D, which are performance comparison graphs of experiment results conducted to compare currently existing methods to the Split Transaction Execution (STE) methodology for accessing an in-memory database, according to some embodiments of the present invention.

The first experimented workload is TPC-C benchmark as known in the art which is currently considered a standard benchmark for evaluating OLTP systems. The TPC-C consists of nine tables that simulate a warehouse-centric order processing application. However, the experiments presented herein are focused on two out of the five database transactions types of the TPC-C - Payment transaction and New Order transaction with the workload comprised of 50% of each of the two transaction types. These two transaction types constitute approximately 88% of the default TPC-C mix and are the most interesting in terms of complexity for evaluating the STE methodology. Four different variations were simulated and experimented for the TPC-C database transactions:

| | |
|---|---|
| TPC-C(1): | Read and write with high contention - only new-order transactions with two warehouses. Graphs 602A, 602B, 602C and 602D present the experiment results for the TPC-C(1) workload variant. |
| TPC-C(2): | Read and write with low contention - only new-order transactions with eight warehouses. Graphs 602E, 602F, 602G and 602H present the experiment results for the TPC-C(2) workload variant. |
| TPC-C(3): | Write with high contention - only payment transactions with two warehouses. Graphs 602I, 602J, 602K and 602L present the experiment results for the TPC-C(3) workload variant. |
| TPC-C(4): | Write with low contention - only payment transactions with eight warehouses. Graphs 602M, 602N, 602O and 602P present the experiment results for the TPC-C(4) workload variant. |

The second experimented workload is Yahoo! Cloud Serving Benchmark (YCSB) as known in the art which may be representative of large-scale on-line services. Each query accesses a single random tuple based on a Zipfian distribution with a parameter (theta - Z) that controls the contention level in the benchmark. Four different variations were simulated and experimented for the YCSB benchmark, where each variation consists of ten access requests:

| | |
|---|---|
| YCSB(1): | Read with low contention - read-only and uniform access distribution (theta=0) with low contention. Graphs 702A, 702B, 702C and 702D present the experiment results for the YCSB(1) workload variant. |
| YCSB(2): | Write with low contention - write-only and uniform access distribution (theta=0) with low contention. Graphs 702E, 702F, 702G and 702H present the experiment results for the YCSB(2) workload variant. |
| YCSB(3): | Mostly write and high contention - high write contention with a hotspot of 10% rows that are accessed by 75% of all queries (theta=0.9), and 90% of the access are writes. Graphs 702I, 702J, 702K and 702L present the experiment results for the YCSB(3) workload variant. |
| YCSB(4): | Mostly read and high contention - high read-write contention with theta=0.9, and 90% of the access are read. Graphs 702M, 702N, 702O and 702L present the experiment results for the YCSB(4) workload variant. |

The experiments were conducted to evaluate several performance parameters of the database transactions utilizing the database access algorithms where the presented results are an average of five different executions. In particular, the evaluated performance parameters include:
(1) Bandwidth - measured in terms of transactions per second (*Mtx*/*s* - Millions of transactions per second). The graphs 602A, 602E, 602I and 602M present the bandwidth experiments results for the TPC-C(1), TPC-C(2), TPC-C(3) and TPC-C(4) workload variants respectively. The graphs 602A, 602E, 602I, 602M, 702A, 702E, 702I, and 702M present the bandwidth experiments results for the YCSB(1), YCSB(2), YCSB(3) and YCSB(4) workload variant respectively.
(2) Database transactions abort events - expressing the relative part of time (work) spent in executing transactions that were eventually aborted out of the total execution time. The graphs 602B, 602F, 602J and 602N present the database transactions abort events experiments results for the TPC-C(1), TPC-C(2), TPC-C(3) and TPC-C(4) workload variants respectively. The graphs 702B, 702F, 702J and 702N present the database transactions abort events experiments results for the YCSB(1), YCSB(2), YCSB(3) and YCSB(4) workload variant respectively. The evaluation of the database transactions abort events does not include the HTM (Intel plain HTM algorithm) as the HTM has no database transaction aborts.
(3) HTM transactions abort events - expressing the relative part of HTM transactions that were aborted due to conflicts out of total HTM transactions that were initiated. The graphs 602C, 602G, 602K and 602O present the HTM transactions abort events experiments results for the TPC-C(1), TPC-C(2), TPC-C(3) and TPC-C(4) workload variants respectively. The graphs 702C, 702G, 702K and 702O present the HTM transactions abort events experiments results for the YCSB(1), YCSB(2), YCSB(3) and YCSB(4) workload variant respectively. The experiments graphs presenting the HTM transactions abort events do not present results for the HTM as the HTM exhibited an extremely large number of HTM transaction making it irrelevant. The HTM results are therefore removed from the experiments results respective graphs to maintain a clear view of the results graphs to allow evaluation of the HTM_STE compared to the relevant algorithms. Also, the evaluation of the HTM transactions abort events does not include the 2PL and SILO algorithms which do not use HTM transactions. The results also do not present HTM transaction abort events resulting from explicit user aborts which are avoided with respect to reverting to the fallback path as described herein before.
(4) HTM fallback events - expressing the relative part of HTM transactions that reverted to the fallback path due to conflicts and/or capacity abort events out of total HTM transactions. The graphs 602D, 602H, 602L and 602P present the HTM fallback events experiments results for the TPC-C(1), TPC-C(2), TPC-C(3) and TPC-C(4) workload variants respectively. The graphs 702D, 702H, 702L and 702P present the HTM fallback events experiments results for the YCSB(1), YCSB(2), YCSB(3) and YCSB(4) workload variant respectively. Once again, the evaluation of the HTM fallback events does not include the 2PL and SILO algorithms which do not use HTM transactions.

As evident from the graphs 602(A-P) and 702(A-P), the HTM_STE presents superior results for all performance parameters over all of the other evaluated database transaction algorithms in all of the benchmarks variants. In general, as seen in the graphs 602A, 602E, 602I, 602M, 702A, 702E, 702I and 702M, the HTM_STE presents better bandwidth performance compared to all the other algorithms in particular with the increase of the number of threads such as the threads 208. While the HTM_STE presents better bandwidth performance, the HTM_STE also completely removes the dependency of the HTM transaction abort events as well as the database transaction abort events from the capacity (i.e. processor utilization) of the threads 208. As evident from the graphs 602C, 602G, 602K, 602O, 702C, 702G, 702K and 702O, when using the HTM_STE, HTM transaction abort events which are due to the capacity are almost extinct. This means that even when increasing the number of threads 208 such that each thread 208 has reduced capacity (processor computing resources) the number of HTM transaction abort events does not increase significantly. This naturally inflicts on the database transaction abort events, which as evident from the graphs 602B, 602F, 602J, 602N, 702B, 702F, 702J and 702N also does not significantly increase with the increased number of the threads 208.With the reduced number of transaction abort events, the number of HTM fallback events is also reduced when using the HTM_STE, as seen in the graphs 602D, 602H, 602L, 602P, 702D, 702H, 702L and 702P.

The performance evaluation results for the HTM_STE are further analyzed with respect to each of the existing database access algorithms.

First the results of the HTM-STE are analyzed compared to the HTM (Intel Plain HTM algorithm). As stated before, the results of the HTM for the database transaction abort events and HTM transactions abort events are presented only for the bandwidth performance parameter graphs (i.e. 602A, 602E, 602I, 602M, 702A, 702E, 702I and 702M). This is because on one hand the HTM has no database transaction aborts since the HTM transaction encapsulates a full database transaction, and as result, a database transaction abort is translated to an HTM abort. On the other hand, due to capacity limitation and crude conflict detection, when the HTM does abort, the HTM exhibits orders of magnitude more transaction abort events and/or fallback events than the HTM_STE and the HTM_TSO. The HTM presents no overhead since the HTM is only doing the actual work. As expected, in workloads that fit HTM size restrictions, the HTM presents best bandwidth performance. For example, the TPC-C(3), TPC-C(4), YCSB(1), YCSB(2), YCSB(3) and YCSB(4) database transactions do fit in HTM size limitation. Therefore when executed by a single thread such as the thread 208, the HTM presents best bandwidth results for these workload variations which are characterized by low contention for both read only and/or write only workloads as seen, for example, in the graphs 702A and 702E. On the other hand, for the TPC-C(1) (graph 602A) and the TPC-C(2) (graph 602E) the HTM presents the lowest bandwidth performance due to multiple inserts (new orders), which exceed the HTM size limitation. However, even for the database transactions complying with the HTM size limitation when the number of threads 208 accessing the database 212 increases, the bandwidth of the HTM is reduced while the other algorithms, in particular the HTM_STE and the HTM_TSO present improved bandwidth. This is due to the reduced capacity available to each of the threads 208 and the HTM may no longer scale. Therefore, even for workload variations in which the HTM presents the best performance, for example, YCSB(1) (graph 702A) and YCSB(2) (graph 702E), the HTM_STE presents better bandwidth for eight threads 208. For TPC-C workload variations characterized by higher contention, for example, TPC-C(3) or TPC-C(4), the HTM_STE performs better than the HTM even for two or more threads as seen in the graphs 602I and 602M respectively. For YCSB workload variations characterized by higher contention, for example, YCSB (3) or YCSB(4) the HTM_STE performs better than the HTM for even fewer threads 208 accessing the database 212. In the YCSB(4), the HTM_STE presents better performance compared to the HTM for three or more threads 208 as seen in the graphs 702M. In the YCSB(3), the HTM_STE presents better performance compared to the HTM even for two threads 208 as seen in the graphs 702I.

The results of the HTM-STE are next analyzed compared to the SILO algorithm. The HTM-STE exhibits improved performance compared to the SILO primarily due to reduced time spent for aborted transactions (database transactions abort events) as well as the eliminated overhead for read-after-write database transactions. The graphs 702A and 702B present the results for the YCSB(1) that is characterized by low aborted work (i.e. low portion of time is spent on aborted database transactions) coupled with read only database transaction thus experiencing no read-after-write transactions and eliminating the need for the write-set. Therefore, since YCSB(1) comprises only read database transaction there is a low number of database transaction abort events, the time spent on aborted database transactions is significantly reduced as seen in the graph 702B and therefore the bandwidth performance of the SILO is very similar to that of the HTM_STE as seen in the graph 702A. To demonstrate the performance superiority of the HTM-STE compared to the SILO, the analysis is focused on the effects resulting from the read-after write database transactions. As can be seen for the TPC-C, when there are no read-sets (no read-after write) such as in TPC-C(3) (graph 602I) an TPC-C(4) (graph 602M) or when there are few write-sets such as in TPC-C(1) (graph 602A) and TPC-C(2) (graph 602E) the SILO and HTM-STE perform very similarly for a single thread 208. This is also true for the YCSB workloads with read only database transactions such as the YCSB(1) or write only database transactions such as the YCSB(2) as seen in the graphs 702A and 702E respectively. However, for workloads characterized by a mix of read database transactions and write database transactions with a non-negligible number of accesses, for example, the YCSB(3) and the YCSB(4), the HTM-STE performs significantly better than the SILO even for a single thread 208 as seen in the graph 702I and 702M respectively. The sensitivity of the SILO to database transaction abort events may be seen in the graph 702F where all the evaluated database access algorithms manage to avoid contention except for the SILO which also presents the lowest bandwidth performance as seen in the graph 702E. The major advantage of the HTM_STE over the SILO is therefore with workloads characterized by both read-after-write database transactions which inflict the overhead penalty and a high database transaction abort rate as seen in the graph 702I.

The results of the HTM-STE are now analyzed compared to the 2PL algorithm. The 2PL algorithm with deadlock detection has comparable performance to the SILO for workloads characterized by read only database transactions or write only database transactions, for example, YCSB(1) and YCSB(2) as seen in graphs 702A and 702E respectively. This may also be seen for the TPC-C(3) and TPC-C(4) as seen in graphs 602I and 602M respectively. For workloads characterized by mixed read and write database transactions (accesses) the 2PL performance is significantly lower than the performance of the SILO, for example, for the TPC-C(1) and TPC-C(2) as seen in graphs 602A and 602E respectively due to the increased overhead due to the read-after-write. Therefore as the HTM_STE performs better than the SILO for these workloads, naturally the HTM_STE significantly outperforms the 2PL. Since the 2PL focuses on deadlock detection, i.e. avoid database transaction abort events thus investing minimum time in aborted database transactions, it may be of interest to compare the amount of time allocated to processing database transactions that eventually abort, i.e. the lost work for the HTM_STE compared to the 2PL. As may be seen for the TPC-C (1-4) workloads, the 2PL exhibits almost no database transaction abort events and hence significantly less database transaction abort events than the HTM-STE. The same is seen for the YCSB workloads characterized with read only or write only database transactions such as the YCSB(1) and YCSB(2) respectively. However, for workloads characterized by mixed read and write database transactions, for example, the YCSB(3), the 2PL exhibits significantly more database transactions abort events hence an increased aborted work (to process database transactions that eventually abort) than the HTM_STE. This is due to the pessimistic write transactions implemented by the HTM_STE which reduces the amount of lost work spent to process database transactions that eventually abort by detecting the conflicting transactions at an early stage (at transaction initiation).

The results of the HTM-STE are now analyzed compared to the HTM_TSO algorithm. Similarly to the HTM_STE, the HTM_TSO also cuts (chops) the database transaction to multiple HTM transactions. The main advantage of the HTM_STE over the HTM_TSO is in reducing the conflicts between HTM transactions through the use of the local (cached) database transactions information (*cached_lca*) and reducing the conflict window in which the concurrent HTM transactions may conflict with each other. This may allow read HTM transactions to be invisible to other HTM transactions in the HTM_STE as opposed to the HTM_TSO in which each HTM transaction reads and/or writes its version in a centralized record that is shared by all the HTM transactions. This may cause a bottleneck which may limit the performance and/or scaling of the HTM_TSO to a high number of threads 208. It is expected that for read only and write only workload scenarios with Z (theta) = 0, for example, the YCSB(1) and YCSB(2), the HTM_STE and the HTM_TSO present substantially similar performance. This was demonstrated in the evaluation experiments as may be seen in graphs 702A and 702E respectively. Even though the HTM_STE and HTM_TSO are substantially similar, the HTM_STE presents slightly better bandwidth performance due to lower numbers of HTM transaction abort events as seen in graphs 702C and 702G which results in less fallback path executions as seen in graphs 702D and 702H. However, for workloads characterized by mixed read and write database transactions the HTM_STE performs significantly better than the HTM_TSO. This may apply to the TPC-C workloads, for example, the TPC-C(1) and TPC-C(2) as seen in graphs 602A and 602E. This may also apply to some of the YCSB workloads, for example, the YCSB(3) and YCSB(3) as evident in graphs 702I and 702M. This is due to the amount of aborted work invested to process database transaction that eventually abort due to the high contention which is significantly higher for the HTM-TSO compared to the HTM_STE as seen in the respective graphs 602B, 602F, 702J and 702N. For all the evaluated workloads, i.e. the TPC-C(1-4) and YCSB(1-4), the HTM_STE exhibits significantly less HTM transaction aborts due to contention compared to the HTM_TSO as seen in graphs 602C, 602G, 602K, 602O and 702C, 702G, 702K and 702O. However, the HTM_STE further mitigates the already reduced number of HTM transaction abort events by reducing the number of fallback path events followed as result of the HTM transaction abort events as seen in graphs 602D, 602H, 602L, 602P, 702D, 702H, 702L and 702P. This is achieved by reducing the conflicts between the HTM transactions as described herein above for the HTM_STE employing the process 100 and further reducing the probability for subsequent HTM transaction conflicts.

It is expected that during the life of a patent maturing from this application many relevant HTM technologies will be developed and the scope of the term HTM technologies, is intended to include all such new technologies a priori.

As used herein the term "about" refers to ± 10 %.

The terms "comprises", "comprising", "includes", "including", "having" and their conjugates mean "including but not limited to".

The term "consisting of" means "including and limited to".

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

## Claims

1. A method of utilizing a Hardware Transactional Memory, HTM, storing an in-memory database (212) comprising a plurality of rows, the method comprising:
splitting (102) each of a plurality of database transactions to a plurality of HTM transactions, each of the plurality of HTM transactions is executed atomically to access one of the plurality of rows of the database, and
for each of the plurality of HTM transactions performing the following operations:
access a certain one of the plurality of rows, for a read HTM transaction, fetch (110) content of a previous version of the certain row in case of a detection of another write HTM transaction concurrently writing the certain row, and for a write HTM transaction abort (112) the write HTM transaction at initiation in case of the detection, and
validate and commit (114) each HTM transaction through an additional HTM transaction,
wherein during the validate-and-commit operation (114) which is conducted for the read HTM transaction as a separate HTM transaction, immediately before the commit, the validate-and-commit HTM transaction checks whether the concurrent write HTM transaction is finished, wherein in case the concurrent write HTM transaction is not finished, the validate-and-commit HTM transaction commits with the fetched previous version of the row data, and wherein in case the concurrent write HTM transaction is finished, the read HTM transaction is re-initiated to fetch the updated row content as written by the concurrent write HTM transaction, the detection is done by comparing a local ID value and a local version value of each HTM transaction to a row ID value and a row version value of the certain row, wherein
the local ID value uniquely identifies each of a plurality of threads initiating concurrently the plurality of database transactions comprising each HTM transaction and the local version value is a self-incrementing value which is incremented by the each thread following each successful commit of one of the plurality of database transactions, and
the row ID value is the ID value of a respective one of the plurality of threads that made a most recent successful commit to the certain row and the row version value is the version value of the respective thread at time of the most recent successful commit.

2. The method according to claim 1, wherein a copy of the content of the previous version of the certain row is created by the another write HTM transaction.

3. The method according to claim 2, wherein the copy is created in the undo-set of the another write HTM transaction.

4. The method according to claim 1, wherein the method further comprises: for the read HTM transaction in case no other write HTM transaction is detected, fetching the content of the certain row.

5. The method according to one of the preceding claims, wherein the method further comprises:
during the read HTM transaction, fetching the content of the certain row updated by the concurrent HTM write transaction in case the concurrent HTM write transaction finished before the validate and commit HTM transaction which is conducted for the read HTM transaction.

6. The method according to one of the preceding claims, wherein the method further comprises:
during the read HTM transaction, fetching the content of the certain row updated by the concurrent HTM write transaction in case the concurrent HTM write transaction and the read HTM transaction are part of the same database transaction.

7. The method according to one of the preceding claims, wherein each thread maintains a local last committed version, LCA, which is used exclusively by each thread, and the local LCA is synchronized with a global LCA only when the row ID and row version ID are different from the ID value and version value which are stored in the local LCA.

8. The method according to one of the preceding claims, wherein the write HTM transaction of each database transaction is re-initiated until exceeding a retry threshold defining a predefined number of retries.

9. The method according to claim 8, wherein each database transaction is aborted after exceeding the retry threshold.

10. The method according to one of the preceding claims, wherein within the additional HTM transaction for the validate and commit which is conducted for the read HTM transaction validating the HTM transaction is done immediately before committing the HTM transaction.

11. The method according to one of the preceding claims, wherein the detection is utilized through a plurality of Bloom filters.

12. A system (200) comprising a computing node (201), the computing node (201) includes one or more processors (202), and a memory (204) including a Hardware Transactional Memory, HTM, storing an in-memory database comprising a plurality of rows, wherein:
the one or more processors (202) are adapted to execute a plurality of database transactions held concurrently to the in-memory database by performing the steps of any one of claims 1 to 11.

13. A computer readable storage medium, comprising computer readable program instructions thereon which, when executed by a computer, cause a processor to carry out the steps of any one of claims 1 to 11.

## Patentansprüche

1. Verfahren zum Nutzen eines Hardware-Transaktionsspeichers, HTM, in dem eine In-Memory-Datenbank (212) gespeichert ist, die eine Vielzahl von Zeilen umfasst, wobei das Verfahren Folgendes umfasst:
Aufteilen (102) jeder von einer Vielzahl von Datenbanktransaktionen in eine Vielzahl von HTM-Transaktionen,
wobei jede von der Vielzahl von HTM-Transaktionen atomar ausgeführt wird, um auf eine von der Vielzahl von Zeilen der Datenbank zuzugreifen, und
Durchführen der folgenden Vorgänge für jede von der Vielzahl von HTM-Transaktionen:
Zugreifen auf eine gewisse von der Vielzahl von Zeilen, bei einer HTM-Lesetransaktion, Abrufen (110) von Inhalten einer vorherigen Version der gewissen Zeile im Falle einer Detektion einer anderen HTM-Schreibtransaktion, die gleichzeitig in die gewisse Zeile schreibt, und, bei einer HTM-Schreibtransaktion, Abbrechen (112) der HTM-Schreibtransaktion bei der Initiierung, im Falle der Detektion, und
Validieren und Festschreiben (114) jeder HTM-Transaktion durch eine zusätzliche HTM-Transaktion,
wobei während des Validierungs- und Festschreibungsvorgangs (114), der für die HTM-Lesetransaktion als separate HTM-Transaktion ausgeführt wird, die HTM-Validierungs- und Festschreibungstransaktion unmittelbar vor dem Festschreiben prüft, ob die gleichzeitige HTM-Schreibtransaktion abgeschlossen ist, wobei, falls die gleichzeitige HTM-Schreibtransaktion nicht abgeschlossen ist, die HTM-Validierungs- und Festschreibungstransaktion mit der abgerufenen vorherigen Version der Zeilendaten festschreibt, und
wobei, falls die gleichzeitige HTM-Schreibtransaktion abgeschlossen ist, die HTM-Lesetransaktion erneut initiiert wird, um die aktualisierten Zeileninhalte abzurufen, wie sie durch die gleichzeitige HTM-Schreibtransaktion geschrieben wurden, wobei die Detektion durch Vergleichen eines lokalen ID-Werts und eines lokalen Versionswerts jeder HTM-Transaktion mit einem Zeilen-ID-Wert und einem Zeilenversionswert der gewissen Zeile erfolgt, wobei
der lokale ID-Wert jeden von einer Vielzahl von Threads eindeutig identifiziert, die gleichzeitig die Vielzahl von Datenbanktransaktionen initiieren, die jede HTM-Transaktion umfassen, und der lokale Versionswert ein selbstinkrementierender Wert ist, der nach jedem erfolgreichen Festschreiben einer von der Vielzahl von Datenbanktransaktionen um jeden Thread inkrementiert wird, und
der Zeilen-ID-Wert der ID-Wert eines jeweiligen der Vielzahl von Threads ist, der eine letzte erfolgreiche Festschreibung in der gewissen Zeile vorgenommen hat, und der Zeilenversionswert der Versionswert des jeweiligen Threads zum Zeitpunkt der letzten erfolgreichen Festschreibung ist.

2. Verfahren nach Anspruch 1, wobei durch die andere HTM-Schreibtransaktion eine Kopie der Inhalte der vorherigen Version der gewissen Zeile erstellt wird.

3. Verfahren nach Anspruch 2, wobei die Kopie im Undo-Set der anderen HTM-Schreibtransaktion erstellt wird.

4. Verfahren nach Anspruch 1, wobei das Verfahren ferner Folgendes umfasst: Abrufen der Inhalte der gewissen Zeile für die HTM-Lesetransaktion, falls keine andere HTM-Schreibtransaktion detektiert wird.

5. Verfahren nach einem der vorhergehenden Ansprüche, wobei das Verfahren ferner Folgendes umfasst:
Abrufen der Inhalte der gewissen Zeile, die durch die gleichzeitige HTM-Schreibtransaktion aktualisiert wurde, während der HTM-Lesetransaktion, falls die gleichzeitige HTM-Schreibtransaktion vor der HTM-Validierungs- und
Festschreibungstransaktion abgeschlossen wurde, die für die HTM-Lesetransaktion ausgeführt wird.

6. Verfahren nach einem der vorhergehenden Ansprüche, wobei das Verfahren ferner Folgendes umfasst:
Abrufen der Inhalte der gewissen Zeile, die durch die gleichzeitige HTM-Schreibtransaktion aktualisiert wurde,
während der HTM-Lesetransaktion, falls die gleichzeitige HTM-Schreibtransaktion und die HTM-Lesetransaktion Teil derselben Datenbanktransaktion sind.

7. Verfahren nach einem der vorhergehenden Ansprüche, wobei jeder Thread eine lokale zuletzt festgeschriebene Version, LCA, verwaltet, die exklusiv durch jeden Thread verwendet wird, und die lokale LCA nur dann mit einer globalen LCA synchronisiert wird, wenn sich die Zeilen-ID und die Zeilenversions-ID von dem ID-Wert und dem Versionswert unterscheiden, die in der lokalen LCA gespeichert sind.

8. Verfahren nach einem der vorhergehenden Ansprüche, wobei die HTM-Schreibtransaktion jeder Datenbanktransaktion erneut initiiert wird, bis ein Wiederholungsschwellenwert überschritten wird, der eine vordefinierte Anzahl von Wiederholungsversuchen definiert.

9. Verfahren nach Anspruch 8, wobei jede Datenbanktransaktion nach Überschreiten des Wiederholungsschwellenwerts abgebrochen wird.

10. Verfahren nach einem der vorhergehenden Ansprüche, wobei im Rahmen der zusätzlichen HTM-Transaktion für die Validierung und Festschreibung, die für die HTM-Lesetransaktion ausgeführt wird, das Validieren der HTM-Transaktion unmittelbar vor dem Festschreiben der HTM-Transaktion erfolgt.

11. Verfahren nach einem der vorhergehenden Ansprüche, wobei die Detektion durch eine Vielzahl von Bloom-Filtern genutzt wird.

12. System (200), umfassend einen Computerknoten (201), wobei der Computerknoten (201) einen oder mehrere Prozessoren (202) und einen Speicher (204) beinhaltet, einschließlich eines Hardware-Transaktionsspeichers, HTM, in dem eine In-Memory-Datenbank gespeichert ist, die eine Vielzahl von Zeilen umfasst, wobei:
der eine oder die mehreren Prozessoren (202) dazu ausgelegt sind, eine Vielzahl von Datenbanktransaktionen auszuführen, die gleichzeitig in der In-Memory-Datenbank aufbewahrt werden, indem die Schritte nach einem der Ansprüche 1 bis 11 durchgeführt werden.

13. Computerlesbares Speichermedium, umfassend darauf computerlesbare Programmanweisungen, die bei Ausführung durch einen Computer einen Prozessor dazu veranlassen, die Schritte nach einem der Ansprüche 1 bis 11 auszuführen.

## Revendications

1. Procédé d'utilisation d'une mémoire transactionnelle matérielle, HTM, stockant une base de données en mémoire (212) comprenant une pluralité de rangées, le procédé comprenant :
la division (102) de chacune d'une pluralité de transactions de base de données en une pluralité de transactions HTM, chacune de la pluralité de transactions HTM est exécutée de manière atomique pour accéder à l'une de la pluralité de rangées de la base de données, et
pour chacune de la pluralité de transactions HTM, la réalisation des opérations suivantes de :
accès à une certaine rangée de la pluralité de rangées, pour une transaction HTM de lecture, récupération (110) d'un contenu d'une version précédente de la certaine rangée en cas de détection d'une autre transaction HTM d'écriture écrivant simultanément la certaine rangée, et pour une transaction HTM d'écriture, interruption (112) de la transaction HTM d'écriture à l'initiation en cas de détection, et
confirmation et validation (114) de chaque transaction HTM par le biais d'une transaction HTM supplémentaire,
dans lequel, au cours de l'opération de confirmation et de validation (114) qui est effectuée pour la transaction HTM de lecture en tant que transaction HTM distincte, immédiatement avant la validation, la transaction HTM de confirmation et de validation vérifie si la transaction HTM d'écriture simultanée est terminée, dans lequel, dans le cas où la transaction HTM d'écriture simultanée n'est pas terminée, la transaction HTM de confirmation et de validation est validée avec la version précédente récupérée des données de rangée, et dans lequel, dans le cas où la transaction HTM d'écriture simultanée est terminée, la transaction HTM de lecture est réinitialisée pour récupérer le contenu de rangée mis à jour tel qu'écrit par la transaction HTM d'écriture simultanée, la détection est effectuée en comparant une valeur d'ID locale et une valeur de version locale de chaque transaction HTM à une valeur d'ID de rangée et une valeur de version de rangée de la certaine rangée, dans lequel la valeur d'ID locale identifie de manière unique chacun d'une pluralité de fils d'exécution initiant simultanément la pluralité de transactions de base de données comprenant chaque transaction HTM et la valeur de version locale est une valeur auto-incrémentée qui est incrémentée par chaque fil d'exécution après chaque validation réussie de l'une de la pluralité de transactions de base de données, et
la valeur d'ID de rangée est la valeur d'ID d'un fil d'exécution respectif de la pluralité de fils d'exécution qui a effectué une validation réussie la plus récente sur la certaine rangée et la valeur de version de rangée est la valeur de version du fil d'exécution respectif au moment de la validation réussie la plus récente.

2. Procédé selon la revendication 1, dans lequel une copie du contenu de la version précédente de la certaine rangée est créée par l'autre transaction HTM d'écriture.

3. Procédé selon la revendication 2, dans lequel la copie est créée dans l'ensemble d'annulation de l'autre transaction HTM d'écriture.

4. Procédé selon la revendication 1, dans lequel le procédé comprend également : pour la transaction HTM de lecture, dans le cas où aucune autre transaction HTM d'écriture n'est détectée, la récupération du contenu de la certaine rangée.

5. Procédé selon l'une des revendications précédentes, dans lequel le procédé comprend également :
au cours de la transaction HTM de lecture, la récupération du contenu de la certaine rangée mis à jour par la transaction d'écriture HTM simultanée dans le cas où la transaction d'écriture HTM simultanée s'est terminée avant la transaction HTM de confirmation et de validation qui est effectuée pour la transaction HTM de lecture.

6. Procédé selon l'une des revendications précédentes, dans lequel le procédé comprend également :
au cours de la transaction HTM de lecture, la récupération du contenu de la certaine rangée mis à jour par la transaction d'écriture HTM simultanée dans le cas où la transaction d'écriture HTM simultanée et la transaction HTM de lecture font partie de la même transaction de base de données.

7. Procédé selon l'une des revendications précédentes, dans lequel chaque fil d'exécution maintient une dernière version validée, LCA, locale qui est utilisée exclusivement par chaque fil d'exécution, et la LCA locale est synchronisée avec une LCA globale uniquement lorsque l'ID de rangée et l'ID de version de rangée sont différents de la valeur d'ID et de la valeur de version qui sont stockées dans la LCA locale.

8. Procédé selon l'une des revendications précédentes, dans lequel la transaction HTM d'écriture de chaque transaction de base de données est réinitialisée jusqu'à dépasser un seuil de tentative définissant un nombre de tentatives prédéfini.

9. Procédé selon la revendication 8, dans lequel chaque transaction de base de données est abandonnée après avoir dépassé le seuil de tentative.

10. Procédé selon l'une des revendications précédentes, dans lequel, dans la transaction HTM supplémentaire pour la confirmation et la validation qui est effectuée pour la transaction HTM de lecture, la confirmation de la transaction HTM est effectuée immédiatement avant la validation de la transaction HTM.

11. Procédé selon l'une des revendications précédentes, dans lequel la détection est utilisée à travers une pluralité de filtres Bloom.

12. Système (200) comprenant un noeud informatique (201), le noeud informatique (201) comporte un ou plusieurs processeurs (202), et une mémoire (204) comportant une mémoire transactionnelle matérielle, HTM, stockant une base de données en mémoire comprenant une pluralité de rangées, dans lequel :
les un ou plusieurs processeurs (202) sont adaptés pour exécuter une pluralité de transactions de base de données conservées simultanément dans la base de données en mémoire en réalisant les étapes de l'une quelconque des revendications 1 à 11.

13. Support de stockage lisible par ordinateur, comprenant des instructions de programme lisibles par ordinateur sur celui-ci, qui, lorsqu'elles sont exécutées par un ordinateur, amènent un processeur à mettre en oeuvre les étapes de l'une quelconque des revendications 1 à 11.
